# EUROPÄISCHE PATENTSCHRIFT

(11) **EP 3 465 039 B1**
(45) Veröffentlichungstag und Bekanntmachung des Hinweises auf die Patenterteilung: **13.11.2024**
(21) Anmeldenummer: 17724584.2
(22) Anmeldetag: 24.05.2017
(51) Int. Cl.: F26B 17/04, B01J 20/30, C08J 3/12, B01J 20/28

(54) **BANDTROCKNERANORDNUNG ZUM TROCKNEN EINES WÄSSRIGEN POLYMERGELS UND ZUM ZERKLEINERN DES GETROCKNETEN POLYMERGELS ZU GETROCKNETEN POLYMERPARTIKELN UND VERFAHREN ZUM TROCKNEN EINES WÄSSRIGEN POLYMERGELS UND ZUM ZERKLEINERN DES GETROCKNETEN POLYMERGELS ZU GETROCKNETEN POLYMERPARTIKELN**
BELT DRYER FOR DRYING AN AQUEOUS POLYMER GEL AND FOR SHREDDING THE DRIED POLYMERGEL TO DRIED POLYMER PARTICLES AND METHOD FOR DRYING AN AQUATIC POLYMER GEL AND FOR SHREDDING THE DRIED POLYMERGEL TO DRIED POLYMER PARTICLES
SÉCHEUR À BANDE POUR SÉCHER UN GEL POLYMÈRE AQUEUX ET POUR DÉCHIQUETER LE GEL POLYMÈRE SÉCHÉ EN DES PARTICULES DE POLYMÈRE SÉCHÉES ET PROCÉDÉ POUR SÉCHER UN GEL POLYMÈRE AQUEUX ET POUR DÉCHIQUETER LE GEL POLYMÈRE SÉCHÉ EN DES PARTICULES DE POLYMÈRE SÉCHÉES

(30) Priorität: 31.05.2016 EP 16172266
(43) Veröffentlichungstag der Anmeldung: 10.04.2019
(73) Patentinhaber: BASF SE, 67056 Ludwigshafen am Rhein (DE)
(72) Erfinder: GRÜNEWALD, Gerald, 67056 Ludwigshafen (DE); FUNK, Rüdiger, 67056 Ludwigshafen (DE); WEISMANTEL, Matthias, 67056 Ludwigshafen (DE)
(74) Vertreter: BASF IP Association
(86) Internationale Anmeldenummer: PCT/EP2017/062514
(87) Internationale Veröffentlichungsnummer: WO 2017/207374

(56) Entgegenhaltungen:
- WO-A1-2015/163512
- WO-A1-2015/163512
- US-A1- 2008 194 402
- US-A1- 2008 194 402
- US-A1- 2012 283 401
- US-A1- 2012 283 401
- US-B1- 6 641 064
- US-B1- 6 641 064

## Beschreibung

Die Erfindung betrifft eine Bandtrockneranordnung zum Trocknen eines wässrigen Polymergels und zum Zerkleinern des getrockneten Polymergels zu getrockneten Polymerpartikeln gemäß dem Oberbegriff des Anspruchs 1. Die Erfindung betrifft weiter ein Verfahren zum Trocknen eines wässrigen Polymergels und zum Zerkleinern des getrockneten Polymergels zu getrockneten Polymerpartikeln.

Als wasserabsorbierende bzw. superabsorbierende Polymere (SAP, kurz Superabsorber genannt) bezeichnet man vernetzte hydrophile Polymere, die ein Vielfaches ihrer Masse im trockenen Zustand (teilweise über das Tausendfache) an Flüssigkeiten, wie z.B. Wasser oder dergleichen Flüssigkeiten absorbieren können.

Das Haupteinsatzgebiet von Superabsorbern liegt im Hygienebereich und spielt auch im medizinischen Bereich in Wundauflagen und Pflastern eine bedeutende Rolle. Weitere wichtige Einsatzgebiete für Superabsorber stellen Landwirtschaft und Gartenbau dar, wo Superabsorber eingesetzt werden, um die Fähigkeit von Erde zur Speicherung von Feuchtigkeit zu verbessern.

Die Anforderungen an einen Superabsorber hängen von dem jeweiligen Anwendungsgebiet ab, weshalb die Eigenschaften der Superabsorber (z. B. der Quellungsgrad und die Quellungsgeschwindigkeit) entsprechend angepasst werden müssen. Dafür ist es von Bedeutung, ob die Aufnahme der zu absorbierenden Flüssigkeit unter Druck und/oder bei höherer Temperatur erfolgen soll, was insbesondere für den Einsatz von Superabsorbern in Inkontinenzprodukten wichtig ist. Von großer Bedeutung sind auch Art und Zusammensetzung der zu absorbierenden Flüssigkeit, da der Quellungsgrad eines Superabsorbers stark vom Salzgehalt des Quellungsmittels beeinflusst wird.

Die wasserabsorbierenden Polymere sind insbesondere Polymere aus (co-) polymerisierten hydrophilen Monomeren, Pfropfcopolymere von einem oder mehreren hydrophilen Monomeren auf einer geeigneten Pfropfgrundlage, vernetzte Cellulose oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche wasser-absorbierende Polymere werden zur Herstellung von Windeln, Tampons und Damenbinden, aber auch als wasserzurückhaltende Mittel im landwirtschaftlichen Gartenbau verwendet.

Ein Herstellungsverfahren für wasserabsorbierende Polymerpartikel weist die Schritte auf: Polymerisieren einer wässrigen Monomer-Lösung oder -Suspension zur Herstellung eines Polymergels; Trocknen des wässrigen Polymergels in einem Bandtrockner mit einem Förderband unter Aufnahme des wässrigen Polymergels auf dem Förderband und Fördern des Polymergels auf dem Förderband in eine Förderrichtung; Brechen und/oder Mahlen des getrockneten Polymergels zu Polymerpartikeln.

Die Herstellung der wasserabsorbierenden Polymere wird beispielsweise in der Monographie "Modern Super Absorbent Polymer Technology", von F. L. Buchholz und A. T. Graham, Wiley-VCH, 1998 oder in Ullmanns "Encyklopedia of Industrial Chemistry", 6. Auflage, Band 35, Seite 73 bis 103 beschrieben.

Zum Trocknen ist ein Bandtrockner, insbesondere als ein Umluftbandtrockner zur Führung von Umluft, mit einem das Förderband weitgehend umfassenden Trockneraufbau ausgebildet und mit einer am Trockneraufbau luftrückführend anschließenden Luftrückführung gebildet. Dabei wird Rückführluft aus dem Trockneraufbau entnommen und über die Luftrückführung dem Trockneraufbau wieder zugeführt. Die Luftrückführung weist eine Luftentnahmeführung auf, die zwischen einem luftstromaufwärtigen Eintrags-Abschnitt am Trockneraufbau und einem luftstromabwärtigen Austrags-Abschnitt in der Luftrückführung ausgebildet ist.

Ein superabsorbierendes Polymer im Zustand eines wässrigen Polymergels wird als ein in einem nassen Zustand befindlich angesehen und kann insofern auch allgemeiner als Nassgut bezeichnet werden; d.h. das wässrige Polymergel hat immer noch einen beträchtlichen Wasseranteil vor dem Trocknen; insbesondere wie unten beschrieben. Das wässrige Polymergel wird durch Polymerisieren einer Monomer-Lösung oder - Suspension gewonnen. Das wässrige Polymergel von noch wässrigen Polymerpartikeln wird bevorzugt als Granulat, z.B. mit einem Feststoffanteil von 40-60%, in den Bandtrockner eingebracht. In diesem Zustand ist das Polymergel grundsätzlich bereits vernetzt mit einem gewünschten Vernetzungsgrad, insbesondere zunächst homogen vernetzt, insbesondere mit einem vergleichsweise niedrigen Vernetzungsgrad insbesondere, wie unten weiter beschrieben, zunächst noch kaum oberflächenvernetzt.

Ein superabsorbierendes Polymer im Zustand eines wasserabsorbierenden Polymer-Partikels ist als in einem Zustand nach dem Trocknen befindlich anzusehen; d.h. es hat einen geringen restlichen Wassergehalt der Polymerpartikel nach dem Trocknen des wässrigen Polymergels, insbesondere wie unten beschrieben; also liegt das superabsorbierende Polymer bevorzugt als getrocknetes Polymergel, also insbesondere als getrocknete Polymerpartikel vor. In diesem Zustand können die wasserabsorbierenden Polymerpartikel bevorzugt nachvernetzt werden, insbesondere oberflächenvernetzt werden, wobei der Oberflächenvernetzungsgrad dann bevorzugt über dem obengenannten vergleichsweise niedrigen zunächst homogenen Vernetzungsgrad liegt. Vorzugsweise wird nach der Polymerisation ein wässriges Polymergel der wasserabsorbierenden Polymere erhalten, das getrocknet wird. Die Grundsätze einer Trocknung des wässrigen Polymergels zu einem wasserabsorbierenden Polymer mit wasserabsorbierenden, insbesondere getrockneten, Polymerpartikeln wird ebenfalls in der Monographie "Modern Super Absorbent Polymer Technology", von F. L. Buchholz und A. T. Graham, Wiley-VCH, 1998, in den Seiten 87 bis 93 beschrieben.

Im Bandtrockner wird das wässrige Polymergel zu einem teilgetrockneten Polymergel getrocknet und liegt insofern als ein Trockenkuchen vor. Der Trockenkuchen liegt bevorzugt als ein Strang von teilgetrockneten Polymergel, also als teilgetrockneter Polymerstrang, auf dem Band des Bandtrockners vor, der sich insofern durch den Trockneraufbau des Bandtrockners erstreckt.

Der Trockenkuchen liegt am Ende des Bandtrockners, d.h. beim Verlassen des Trockneraufbaus, als weitgehend getrockneter Strang von getrocknetem Polymergel, etwa in Form einer Platte oder einem brettartigen Strang, also als getrockneter Polymerstrang, vor. Im Folgenden wird teilweise auf das teilgetrocknete Polymergel und auf das getrocknete Polymergel des Trockenkuchens bereits mit der Begrifflichkeit "getrocknete Polymerpartikel" Bezug genommen; beide Fälle werden mit den Begriffen "superabsorbierendes oder wasserabsorbierendes Polymergel" oder "getrocknetes Polymergel" im Unterschied zu "wässrigem Polymergel" erfasst.

Ein Eintragsmodul des Bandtrockners dient zum Eintragen des superabsorbierenden Polymers in Form der wässrigen Polymerpartikel. In der Praxis werden dann die Trocknungsbedingungen gewählt, die einen Kompromiss zwischen Ausnutzung der Trocknerkapazität und der Verarbeitbarkeit der wasserabsorbierenden Polymerpartikel darstellen. Der Bandtrockner hat im Vergleich zu anderen Trocknerbauarten den Vorteil, dass (bis auf die Schwerkraft) keine wesentliche mechanische Beanspruchung das Produkt beeinträchtigt, da das wässrige Polymergel bzw. die wasserabsorbierenden Polymerpartikel lose auf einem Förderband aufliegen. Prinzipiell bietet ein Bandtrockner die Möglichkeit, eine oder mehrere Kontrollzonen mittels einer oder mehreren Trocknerzonen baulich zu gestalten.

Ein Bandtrockner umfasst beispielsweise ein Produktaufgabemodul für einen Polymereintrag, eine Anzahl von Trocknermodulen zur Bildung einer oder mehrerer Trocknerzonen und ein Austragsmodul für einen Polymeraustrag. Ein Austragsmodul dient zum Austragen des superabsorbierenden Polymers in Form der wasserabsorbierenden Polymerpartikel; insbesondere endet das Förderband im Austragsmodul bzw. hat dort einen Umkehrpunkt. Das superabsorbierende Polymer kann im Austragsmodul am Ende des Bandtrockners auf einen Brecher od. dgl. Zerkleinerer fallen oder kann diesem zugeführt werden. Dazu kann der Trockenkuchen als Ganzes dem Zerkleinerer zugeführt werden oder als Bruch des Trockenkuchens oder als sonstige grobe Brocken des Trockenkuchens. Die getrockneten und noch nicht zerkleinerten Polymerpartikel liegen dann teils als Bruch von getrocknetem Polymergel, z.B. vergleichsweise grobe Brocken, und teils als unvermeidlicher Bruchrest von getrocknetem Polymergel, vor.

Es entstehen danach durchweg getrocknete Polymerpartikel von getrocknetem Polymergel durch das Zerkleinern im Zerkleinerer. Insbesondere der Bruchrest von getrocknetem Polymergel und Reste infolge des Zerkleinerns umfasst feine Pulverstücke von Polymerpartikeln umfassend Fein- und Feinstpartikel. Die getrockneten und zerkleinerten Polymerpartikel werden nach dem Zerkleinern bevorzugt in eine pneumatische Förderung eingebracht und einem Mahlvorgang zugeführt; also danach zu gemahlenen getrockneten Polymerpartikel weiterverarbeitet.

WO2015/163512 A1 erläutert ein Herstellungsverfahren für Wasser-absorbierende Polymerpartikel, bei dem ein Polymergel getrocknet wird. Nach dem Trocknen wird das getrocknete Polymergel einem ersten Mahlschritt in einer ersten Mahlvorrichtung, dann einer Verweilvorrichtung und dann einem zweiten Mahlschritt in einer zweiten Mahlvorrichtung zugeführt. Die Verweilzeiten in der ersten und zweiten Mahlvorrichtung liegen im Bereich von 3 Minuten und die Verweilzeit in der Verweilvorrichtung bei 30min oder mehr, immer deutlich über einer Verweilzeit in einer Mahlvorrichtung. Durch die Verweilvorrichtung wird vermieden, dass geklumptes Material in die weitere Förderung gelangt. Die Mahlung erfolgt im Hinblick auf Partikelgrößen bei 150µm.

Insbesondere gemahlene getrocknete Polymerpartikel können einem Siebvorgang zugeführt werden. Eine Gutkornfraktion kann eine schon bevorzugte gewünschte Partikelgrö-βe haben und kann bereits abgetrennt werden. Eine Überkorn- oder Feinkorn-Fraktion kann ggfs. nochmals gemahlen, gesiebt oder bearbeitet werden und zur Gutkornfaktion hinzugefügt werden. Die getrockneten, gemahlenen und gesiebten Polymerpartikel der Gutkornfraktion können oberflächennachbearbeitet werden. Die getrockneten, gemahlenen und gesiebten und oberflächennachbearbeiteten Polymerpartikel können einer Schutzsiebung zugeführt werden.

So betrifft US 6,641,064 B1 ein Verfahren zur vollständigen Trocknung von Hydrogelen, bei dem man die folgenden Verfahrensschritte nacheinander ausführt: a) Trocknung von Hydrogelen durch Kontakt- oder Konvektivtrocknung, b) Vorzerkleinerung des Hydrogels, c) Mahlung des vorzerkleinerten Hydrogels mit einem Grob- oder Brechwalzenstuhl, d) Abtrennung der feuchten elastischen Hydrogelteilchen, e) Nachtrocknung der feuchten elastischen Hydrogelteilchen.

US2012/0283401 A1 betrifft ein Verfahren zur Herstellung von wasserabsorbierenden Polymerpartikeln, umfassend die Polymerisation einer Monomerlösung oder -suspension, das Trocknen des resultierenden Polymergels und das Mahlen und Klassieren des getrockneten Polymergels, wobei das Mahlen mittels einer mehrstufigen Walzenmühle durchgeführt wird. Ein Mahlspalt der ersten Mahlung hat eine Breite von 500 bis 5000 Mikrometer, wobei der durch den ersten Mahlspalt tretende Produktmassenstrom durch einen Magnetabscheider zum zweiten Mahlspalt geleitet wird und wobei der zweite Mahlspalt eine geringere Spaltbreite als der erste Mahlspalt aufweist.

Beim Trocknungsverfahren können kontinuierlich arbeitende Konvektionsbandtrockner verwendet werden; im Folgenden betrifft dies einen Bandtrockner, der eingangs genannten Art, insbesondere einen Umluftbandtrockner. Der eingangs genannte Bandtrockner ist für ein wässriges Polymergel, insbesondere zur Bildung eines begrenzt rieselfähigen, stückigen und verformbaren pastösen Produkts, besonders ausgebildet. Bei einem kontinuierlich arbeitenden Bandtrockner wird die als durchlüftbares Haufwerk aufgelegte Produktschicht eines wässrigen Polymergels auf einem perforierten Förderband durch den Trocknungsraum transportiert und dabei zunächst zu teilgetrocknetem Polymergel und schließlich zu getrocknetem Polymergel getrocknet; dieses wird dann zu den oben genannten getrockneten Polymerpartikeln als wasserabsorbierende Polymerpartikel weiterverarbeitet.

Das die Produktschicht des Trockenkuchens von teilgetrocknetem Polymergel und dann getrocknetem Polymergel durchströmende Trocknungsgas dient sowohl zum Wärmeeintrag in das zu trocknende wässrige Polymergel bzw. in die teilweise getrockneten wasserabsorbierenden Polymerpartikel als auch zum Abtransport von verdampfender Feuchte. Als Trocknungsgas wird bevorzugt Luft als Trocknungsluft verwendet. Bei einem Umluftbandtrockner wird die die Produktschicht durchströmende Trocknungsluft zudem als Umluft geführt.

Bandtrockner mit Transportbändern sind zu unterscheiden von Bandreaktoren. Während ein Bandreaktor verwendet wird, um wässriges Polymergel aus seinen Herstellungsstoffen zu produzieren wird ein Bandtrockner verwendet, um wasserabsorbierende Polymerpartikel aus einem wässrigen Polymergel zu produzieren, insbesondere um bevorzugt aus einem mit gewünschtem Vernetzungsgrad zunächst homogen vernetzten, ggfs. auch oberflächenvernetzten-wässrigen Polymergel die genannten wasserabsorbierenden Polymerpartikel zu produzieren.

WO2015/074966 A1 beschreibt einen Plattenbandtrockner für superabsorbierende Polymere (SAP, kurz Superabsorber genannt) mit einem Zerkleinerer. Solch ein Zerkleinerer in Form eines Kreuzflügelzerkleinerers ist grundsätzlich bekannt und wird zur Zerkleinerung von SAP eingesetzt und ist kommerziell erhältlich. Ein Beispiel ist z.B. aus der Internetdarstellung der Firma Grenzebach ersichtlich, https://www.yumpu.com/de/document/view/6323642/thermische-verfahrenstechnikqrenzebach-maschinenbau-qmbh .

Ein Kreuzflügelzerkleinerer der Anmelderin ist grundsätzlich in Bezug auf eine SAP-Produktion in WO2013/072419 A1 beschrieben und schematisch in FIG.1 wiedergegeben. Dieser Kreuzflügelzerkleinerer umfasst eine Welle, an der eine Vielzahl von Barren aufgenommen sind. Neben den auf der Welle angeordneten Barren umfasst der Kreuzflügelzerkleinerer eine Vielzahl fest montierter Barren, die in Zwischenräume der auf der Welle angeordneten Barren eingreifen. Die in den Zerkleinerer eingegebenen Poly(meth)acrylat-Brocken fallen auf die fest montierten Barren und bleiben auf diesen liegen. Durch die sich mit der Welle mitdrehenden Barren werden die Brocken zerschlagen.

In WO2014/044780 A1 ist allgemein ein Brecher in Kombination mit einem einstellbaren Leitmittel in Form eines Gitters offenbart, das zusätzlich eine gewisse Zerkleinerung von SAP-Brocken bewirkt.

US2008/0194402 A1 betrifft ein Verfahren zum Reduzieren einer Teilchengröße von glasartigen Polysacchariden. Das Verfahren reduziert effizient die Partikelgröße von glasähnlichen Polysacchariden, ausgewählt aus der Gruppe bestehend aus glasähnlichen Polysacchariden mit einem Feuchtigkeitsgehalt von 0 % bis etwa 13 % und einem glasartigen Zustand der glasartigen Polysaccharide. Das Verfahren umfasst die Verwendung einer Walzenmühle mit mindestens drei aufeinanderfolgenden Rollenpaaren.

Wünschenswert ist eine verbesserte Zerkleinerung von getrockneten Polymerpartikeln des groben Bruchs und/oder der groben Brocken, aus einem getrockneten Polymerstrang des Trockenkuchens am Ende eines Förderbandes eines Bandtrockners. Begründet liegt dies im Wesentlichen darin, dass zum Einen die Eigenschaften des Bruchs oder Brocken von getrocknetem Polymergel hinsichtlich Härte und Konsistenz variieren kann und damit die Zerkleinerungsfähigkeit eines Zerkleinerers unterschiedlich zum Tragen kommt. Andererseits ist es für eine pneumatische Förderung und/oder Mahlung vorteilhaft, dass ein weitgehend vergleichmäßigter Produktstrom von bereits gut zerkleinerten Polymerpartikeln aus dem Trockenkuchen, dem groben Bruch oder den Brocken von getrocknetem Polymergel zur Verfügung gestellt wird, insbesondere mit vergleichsweise konstanten Parametern in die pneumatische Förderung einbringbar ist.

Eine Aufgabe der Erfindung ist es, eine verbesserte Vorrichtung und ein verbessertes Verfahren zum Trocknen eines wässrigen Polymergels und zum Zerkleinern des getrockneten Polymergels zu getrockneten Polymerpartikeln anzugeben. Insbesondere soll das getrocknete Polymergel als Polymerstrang, insbesondere Trockenkuchen, Bruch oder Brocken des Trockenkuchens, nach der Trocknung bzw. nach einem Bandtrockner in verbesserter Weise zu getrockneten Polymerpartikeln zerkleinert werden. Insbesondere sollen die getrockneten Polymerpartikel im Rahmen des verbesserten Zerkleinerungsverfahrens für das getrocknete Polymergel als Polymerstrang, insbesondere Trockenkuchen, Bruch oder Brocken des Trockenkuchens, mit einer für eine anschließende pneumatische Förderung und/oder Mahlung bestimmten Partikelgröße zerkleinert werden. Betreffend die Vorrichtung wird die Aufgabe durch die Erfindung mit einer Bandtrockneranordnung zum Trocknen eines wässrigen Polymergels und zum Zerkleinern des getrockneten Polymergels zu getrockneten Polymerpartikeln gemäß dem Anspruch 1 gelöst.

Betreffend das Verfahren wird die Aufgabe durch die Erfindung mit einem Verfahren des Anspruchs 15 gelöst.

Die Zerkleinerungsanordnung ist für eine verbesserte Zerkleinerung von getrockneten Polymerpartikeln direkt aus einem getrockneten Polymerstrang des Trockenkuchens am Ende eines Förderbandes (Bandtrocknerbandes) oder des groben Bruchs des Trockenkuchens bzw. der groben Brocken aus einem getrockneten Polymerstrang des Trockenkuchens am Ende eines Förderbandes (Bandtrocknerbandes) eines Bandtrockners ausgelegt. Die Zerkleinerungsanordnung ist in dem Sinne in Produktstromrichtung unmittelbar nach dem Trockneraufbau angeordnet oder an diesem angebracht. Erfindungsgemäß ist die Zerkleinerungsanordnung in Produktstromrichtung vor einer Förderstrecke angeordnet, insbesondere in Produktstromrichtung unmittelbar vor einem Eintrag in eine Förderstrecke angeordnet.

Die Erfindung geht von der Überlegung aus, dass eine verbesserte Zerkleinerung von getrockneten Polymerpartikeln direkt aus einem getrockneten Polymerstrang des Trockenkuchens am Ende eines Förderbandes oder des groben Bruchs des Trockenkuchens bzw. der groben Brocken aus einem getrockneten Polymerstrang des Trockenkuchens am Ende eines Förderbandes eines Bandtrockners mit einem einzigen Zerkleinerer problematisch bzw. kaum zu erreichen ist.

Ausgehend von dieser Überlegung hat die Erfindung erkannt, dass die Nutzung einer Zerkleinerungsanordnung mit wenigstens einem ersten Zerkleinerer und einem zweiten Zerkleinerer mit jeweils einer rotierenden Welle vorteilhaft ist; nämlich zwischen einem Polymeraustrag nach dem Ende des Förderbandes des Bandtrockners und vor der pneumatischen Förderung.

So kann der erste Zerkleinerer aus den groben Brocken bereits einen Produktstrom von grob zerkleinerten getrockneten Polymerpartikeln zur Verfügung stellen, die in den zweiten Zerkleinerer einbringbar sind. Dieser zweite Zerkleinerer stellt dann einen Produktstrom von gut zerkleinerten, insbesondere fein zerkleinerten, getrockneten Polymerpartikein zur Verfügung. Dieser Produktstrom ist vorteilhaft zudem bereits weitgehend vergleichmäßigt. Letzteres ergibt sich teilweise bereits aufgrund der Anordnung des ersten Zerkleinerers und des zweiten Zerkleinerers hintereinander, die eine gewisse Vergleichmäßigung des Produktstromes erreichen.

Unter einem Zerkleinerer im Sinne der vorliegenden Anmeldung soll allgemein ein Mittel verstanden werden, das wenigstens eine rotierende Walze (Rotor) aufweist; insbesondere eine rotierende Walze allein (wie z.B. bei einer Zerkleinerungsfräse, Fräse oder Schneidmühle) oder eine rotierende Walze in Kombination mit einem stehenden Teil (wie z.B. bei einem Brecher, insbesondere einem Kreuzflügelzerkleinerer) oder auch eine rotierende Walze in Kombination mit einer oder mit mehreren rotierenden Walzen (wie z.B. bei einem Walzenbrecher). Dies kann auch einen Zerkleinerer in Form einer Förderschnecke umfassen, die zwar primär einem Förderzweck dient, jedoch auch maßgeblich eine Zerkleinerungsfunktion wahrnimmt. Ein Zerkleinerer umfasst also wenigstens alle Arten von Fräsen, Brechern und zerkleinernden Schnecken, nicht jedoch Gitter oder dergleichen Leitmittel, da letztere keine rotierende Walze aufweisen, die aktiv der Zerkleinerung von getrocknetem Polymergel als weitgehend getrockneter Polymerstrang zu getrockneten Polymerpartikeln dient.

Ein Zerkleinerer bietet den Polymerpartikeln eine Verweilzeit in der Zerkleinerungsanordnung nicht mehr als, eher von deutlich unter einer Minute, insbesondere unterhalb von 30sec. Ein Zerkleinerer zerkleinert die Polymerpartikel zu Massenmittel Teilchendurchmesser nach dem Zerkleinerer von nicht kleiner als, eher deutlich oberhalb von 1 mm.

Unter einer Anordnung des zweiten Zerkleinerers in Produktstromrichtung unmittelbar nach dem ersten Zerkleinerer ist vorliegend zu verstehen, dass der zweite Zerkleinerer auf den ersten Zerkleinerer folgt; entweder frei von Einbauten oder lediglich unter Zwischenbau eines Leitmittels wie eines produktstromausrichtenden Umlenkmittels oder eines produktstromzusammenführenden Fördermittels, wie dem einer Förderschnecke oder dergleichen.

Vorliegend ist der zweite Zerkleinerer in direkter räumlicher Nähe zum ersten Zerkleinerer angeordnet. Insbesondere ist die Verweilzeit der Polymerpartikel zwischen dem ersten und zweiten Zerkleinerer deutlich kleiner als die Verweilzeit der Polymerpartikel in dem ersten oder zweiten Zerkleinerer. Hier bildet die Förderschnecke ggfs. eine Ausnahme soweit sie nur als produktstromzusammenführendes Fördermittel dient ohne selbst als Zerkleinerer zu funktionieren. So liegen die Verweilzeiten zwischen dem ersten und zweiten Zerkleinerer im Bereich von unterhalb 5 sec. ggfs. sogar unter 1 sec. Dies gilt insbesondere für den Fall, dass der zweite Zerkleinerer frei von Einbauten unmittelbar nach dem ersten Zerkleinerer folgt; d.h. zur Aufnahme von frei fallenden vorzerkleinerten getrockneten Polymerpartikeln aus dem ersten Zerkleinerer örtlich unmittelbar unterhalb des ersten Zerkleinerers platziert ist.

Die Verweilzeiten im ersten Zerkleinerer und zweiten Zerkleinerer liegen insbesondere im Bereich einigere Sekunden bis maximal 10sec., insbesondere zwischen 1 sec. und 5 sec.

Die Verweilzeiten in einer Förderschnecke liegen in der Regel bei unterhalb von 60 sec. Die Verweilzeiten in der Zerkleinerungsanordnung liegen deutlich unter 1.5 Minuten.

Die Massenmittel Teilchendurchmesser nach Mahlung liegen eher im Bereich deutlich unterhalb von 1 mm während die Teilchendurchmesser nach Zerkleinerung eher im Bereich deutlich oberhalb von 1 mm liegen. Insofern ist unter einem Zerkleinerer kein Mahlwerkzeug oder Mühle zu verstehen.

Insofern ist gemäß dieser Anmeldung zwischen einer Zerkleinerung und einer Mahlung aufgrund der Funktion und Ergebnis deutlich zu unterscheiden. Insbesondere ist ein Zerkleinerer keine Mühle.

Erfindungsgemäß ist die Zerkleinerungsanordnung in Produktstromrichtung unmittelbar nach dem Trockneraufbau zum Zerkleinern des getrockneten Polymergels zu getrockneten Polymerpartikeln und/oder unmittelbar vor einer Förderstrecke, insbesondere einem Eintrag zu einer Förderstrecke, nämlich vor einer pneumatischen Förderung angeordnet.

Die Zerkleinerungsanordnung ist in Produktstromrichtung vor einer Mahlung angeordnet. Bevorzugt ist vorgesehen, dass die Polymerpartikel in Produktstromrichtung nach der Zerkleinerungsanordnung mittels einer Förderung, insbesondere einer pneumatischen Förderung, zu einer Mahlung transportiert werden; insofern befindet sich zwischen der Zerkleinerungsanordnung und der Mahlung die Förderstrecke.

Unter einer Anordnung des ersten Zerkleinerers in Produktstromrichtung unmittelbar nach dem Trockneraufbau ist vorliegend zu verstehen, dass der erste Zerkleinerer auf den dem Trockneraufbau folgt, vorzugsweise an diesen angeschlossen ist; entweder frei von Einbauten oder lediglich unter Zwischenbau eines Leitmittels wie eines produktstromausrichtenden Umlenkmittels oder eines produktstromzusammenführenden Fördermittels, wie dem einer Förderschnecke oder dergleichen.

Insofern ist die Zerkleinerungsanordnung ausgelegt direkt am Trockenkuchen zu arbeiten und /oder den groben Bruch und/oder die groben Brocken, aus einem getrockneten Polymerstrang des Trockenkuchens am Ende eines Förderbandes eines Bandtrockners aufzunehmen und zu zerkleinern. Die Zerkleinerungsanordnung dient also, abgesehen von Umlenkblechen, zur unmittelbaren ersten Zerkleinerung dieses getrockneten Polymerstrangs des Trockenkuchens.

Auch hier ergibt sich ein deutlicher Unterschied zu einer Mühle. Während ein Zerkleinerer -eher im vorderen Bereich eines Produktstromes-- zur Darstellung eine zunächst zerkleinerten und transportfähigen, mahlbaren Produktstroms von Polymerpartikeln dienen soll dient ein Mühle -eher im hinteren Bereich eines Produktstromes-- zur Darstellung eines bereits verarbeitbaren Pulvers von Polymerpartikeln. Die beim Mahlen auftretenden Feinstäube in Mühlen sind bei Zerkleinerern zu vermeiden, da sie die Transportfähigkeit von Polymerpartikeln beeinträchtigen.

Des Weiteren ist ein Herausfallen von grobem Bruch oder groben Brocken von getrockneten Polymerpartikeln aus der Zerkleinerungsanordnung weitgehend reduziert. Denn der erste Zerkleinerer kann derart optimiert werden, dass --bis auf unvermeidbare Ausnahmen-- auch der Trockenkuchen direkt, grober Bruch oder grobe Brocken des Trockenkuchens zerkleinert werden. Der erste Zerkleinerer zerkleinert zunächst zu den genannten grob zerkleinerten getrockneten Polymerpartikeln. Der zweite Zerkleinerer zerkleinert diese wiederum zu den genannten gut bzw. fein zerkleinerten Polymerpartikeln. Deren Größenverteilung einer mittleren Partikelgröße ist hinsichtlich der pneumatischen Förderung und/oder den Bedürfnissen einer Mahlung abgestimmt.

Vorteilhaft weist der Trockneraufbau ein Förderband zur Aufnahme des wässrigen Polymergels auf dem Förderband und zum Fördern des Polymergels auf dem Förderband in eine Förderrichtung durch den Trockneraufbau auf und einen Polymergeleintrag und einen Polymergelaustrag. Insbesondere weist der Trockneraufbau eine am Trockneraufbau angeschlossene Luftführung zum Fördern von Zuluft und Abluft zum Trocknen des wässrigen Polymergels auf.

Die Zerkleinerungsanordnung ist vorteilhaft in Produktstromrichtung nach einem Polymergelaustrag zum Zerkleinern des getrockneten Polymergels zu getrockneten Polymerpartikeln angeordnet, wobei das getrocknete Polymergel als Trockenkuchen direkt oder als grober Bruch oder grobe Brocken von einem getrockneten Polymerstrang eines Trockenkuchens des Polymergels der Zerkleinerungsanordnung zugeführt und zu getrockneten Polymerpartikel zerkleinert wird.

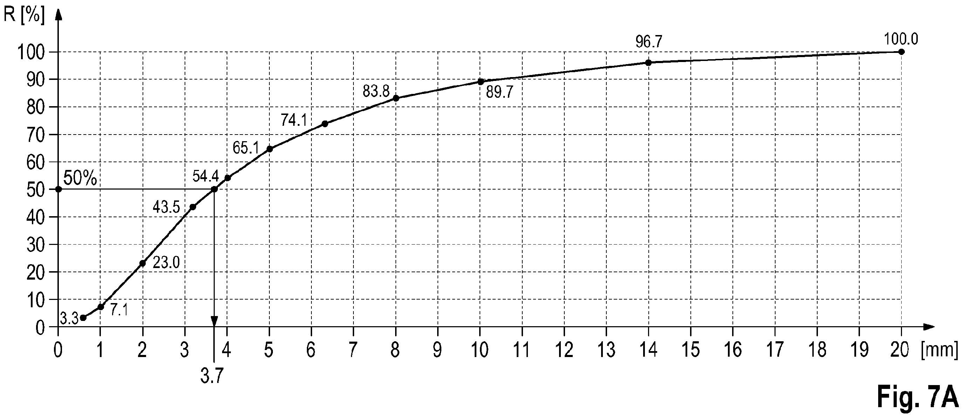

Erfindungsgemäß ist die Zerkleinerungsanordnung in Produktstromrichtung vor einer pneumatischen Förderung und vor einer Mahlung angeordnet. Dies betrifft eine Zerkleinerung, die ausgebildet ist, Polymerpartikel zu zerkleinern auf einen Massenmittel Teilchendurchmesser zwischen 1 - 9 mm, ganz besonders bevorzugt 1-5 mm. Der Massenmittel Teilchendurchmesser nach Zerkleinerung wird nach EDANA Testmethode Nr. WSP 220.2-05 "Partikel Size Distribution" ermittelt. Für die Partikelgrößenverteilungsbestimmung werden allerdings Siebe mit den Maschenweiten 0.6 / 1 / 2 / 3.15 / 4 / 5 / 6.3 / 8 /10 /14 / 20 mm verwendet. Dabei werden die Massenanteile der Siebfraktionen kumuliert aufgetragen und der Massenmittel Teilchendurchmesser wird graphisch bestimmt. Der Massenmittel Teilchendurchmesser ist hierbei der Wert der Maschenweite, der sich für kumulierte 50 Gew.-% ergibt (siehe Fig.7A).

Die Zerkleinerung liefert bevorzugt einen Produktstrom von vorteilhaft förderbaren und anschließend mahlbaren Polymerpartikeln.

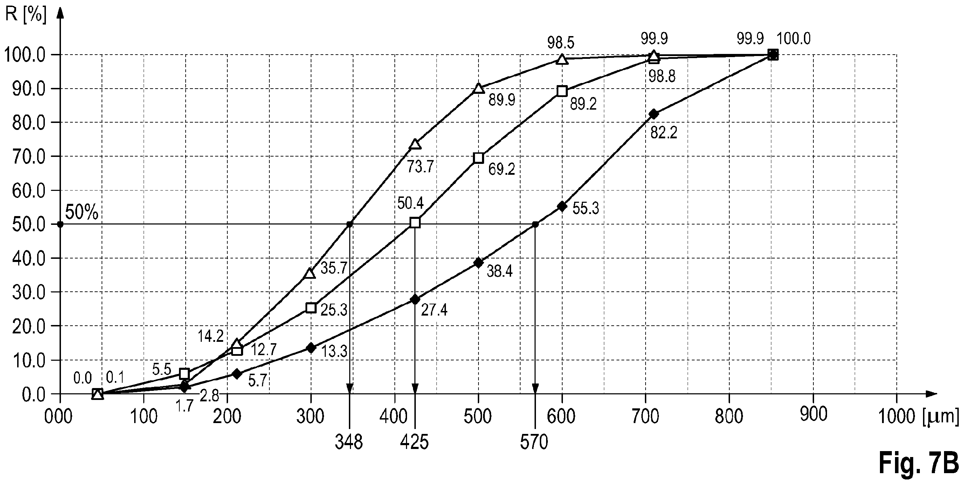

Der Massenmittel Teilchendurchmesser der durch die Zerkleinerung zerkleinerten und desweiteren durch die Mahlung gemahlenen Polymerpartikel beträgt mindestens 200 µm, nämlich von 250 bis 700 µm, ganz besonders von 300 bis 600 µm. Der Massenmittel Teilchendurchmesser nach Mahlung wird analog dem Massenmittelteilchendurchmesser nach Zerkleinerung bestimmt. Für die Partikelgrößenverteilungsbestimmung nach Mahlung werden allerdings Siebe mit den Maschenweiten 45 /150 / 212 / 300 / 425 / 500 / 600 / 710 / 850 µm verwendet (siehe Fig.7B).

Der Anteil an Polymerpartikeln mit einer mittleren Partikelgröße von größer 150 µm beträgt vorzugsweise mindestens 90 Gew.-%, besonders bevorzugt mindesten 95 Gew.-%, ganz besonders bevorzugt mindestens 98 Gew.-%.

Die Erfindung hat erkannt, dass die Kombination eines ersten Zerkleinerers mit einem zweiten Zerkleinerer besser auf eine Verteilung von grobem Bruch unmittelbar nach dem Förderband einerseits abgestimmt werden kann und andererseits das Edukt von gut bzw. fein zerkleinertem getrockneten Polymerpartikeln unabhängig davon hinsichtlich der Bedürfnisse der pneumatischen Förderung und/oder einer Mahlung abgestimmt werden kann.

Darüber hinaus wird der Vorteil genutzt, dass die Zerkleinerungsanordnungvorzugsweise unmittelbar nach dem Polymeraustrag am Ende des Förderbandes und unmittelbar stromabwärtig vor der pneumatischen Förderung-- angeordnet ist. Auf diese Weise wird die Zerkleinerungsanordnung platzsparend zwischen dem Bandtrockner und der pneumatischen Förderung untergebracht. Dennoch kann diese unabhängig vom Bandtrockner betrieben werden, insbesondere weitgehend unabhängig von den Eigenschaften des vom getrockneten Polymerstrang abgebrochenen groben Bruchs, z.B. groben Brocken, von getrockneten Polymerpartikeln.

Es ist vorgesehen, dass der zweite Zerkleinerer örtlich neben oder unterhalb des ersten Zerkleinerers zur Aufnahme von vorzerkleinerten getrockneten Polymerpartikeln platziert ist. Die Erfindung hat erkannt, dass der zweite Zerkleinerer hinsichtlich des Ortes unmittelbar unterhalb des ersten Zerkleinerers platziert ist. Dadurch können die aus dem ersten Zerkleinerer herausfallenden grob zerkleinerten getrockneten Polymerpartikel unter Nutzung der Schwerkraft direkt in den zweiten Zerkleinerer fallen. Eine Förderung der grob zerkleinerten Polymerpartikel zum zweiten Zerkleinerer, die aktiv Fördermittel, wie pneumatische Mittel oder mechanische Mittel einsetzt, erübrigt sich damit. Insbesondere ist der zweite Zerkleinerer unmittelbar unterhalb des ersten Zerkleinerers zur Aufnahme von frei fallenden getrockneten Polymerpartikeln aus dem ersten Zerkleinerer platziert.

Vorteilhafte Weiterbildungen der Erfindung sind den Unteransprüchen zu entnehmen und geben im einzelnen vorteilhafte Möglichkeiten an, das erläuterte Konzept im Rahmen der Aufgabenstellung sowie hinsichtlich weiterer Vorteile zu realisieren.

Besonders vorteilhaft umfasst die Zerkleinerungsanordnung ein Umlenkmittel, wobei der erste Zerkleinerer der Zerteilungsanordnung in Produktstromrichtung nach dem Umlenkmittel angeordnet ist. Ein Umlenkmittel kann vorteilhaft zum Umlenken des getrockneten Polymerstrangs und bereits dem kontrollierten Abbrechen von groben Brocken vom Polymerstrang des Trockenkuchens genutzt werden. Dies vergleichmäßigt die anfallenden groben Brocken und vermeidet zudem, dass grobe Brocken oder Teile derselben an der Zerkleinerungsanordnung vorbeigeführt werden. Insbesondere wird eine richtungsspezifische Ausrichtung der groben Brocken zum ersten Zerkleinerer hin erreichbar. Vorzugsweise ist vorgesehen, dass der erste Zerkleinerer örtlich unterhalb das Umlenkmittels platziert ist und/oder zur Aufnahme von Bruch eines getrockneten Polymerstrangs von getrockneten Polymerpartikeln, wobei das Umlenkmittel relativ zum ersten Zerkleinnerer derart ausgerichtet ist, dass der Bruch eines getrockneten Polymerstrangs in den ersten Zerkleinerer fällt.

Ein Herstellungsverfahren zur Herstellung wasserabsorbierender Polymerpartikel, sieht vorteilhaft die Schritte vor:
- Polymerisieren einer wässrigen Monomer-Lösung oder -Suspension zur Herstellung eines wässrigen Polymergels,
- Fördern des wässrigen Polymergels zu einer Bandtrockneranordnung,
- Trocknen des wässrigen Polymergels in der Bandtrockneranordnung mit einem Förderband (Bandtrocknerband ) unter Aufnahme des wässrigen Polymergels auf dem Förderband und Fördern des Polymergels auf dem Förderband in eine Förderrichtung - Zerkleinern und Mahlen des getrockneten Polymergels zu wasserabsorbierenden Polymerpartikeln, wobei
- zum Zerkleinern am Polymeraustrag in Produktstromrichtung nach dem Polymeraustrag eine Zerkleinerungsanordnung zur Zerkleinerung eines Trockenkuchens von getrocknetem Polymergel zu getrockneten Polymerpartikeln vorgesehen ist, dadurch gekennzeichnet, dass
- die Zerkleinerungsanordnung wenigstens einen ersten Zerkleinerer und zweiten Zerkleinerer mit jeweils einer rotierenden Walze aufweist, wobei der zweite Zerkleinerer in Produktstromrichtung unmittelbar nach dem ersten Zerkleinerer und unterhalb des ersten Zerkleinerers und in Produktstromrichtung vor einer pneumatischen Förderung und/oder vor einer Mahlung angeordnet ist.

Bevorzugt ist die Zerkleinerungsanordnung ausgebildet, den Trockenkuchen von getrocknetem Polymergel zu getrockneten Polymerpartikeln mit einer mittleren Partikelgrö-βe, nämlich einem Massenmittel Teilchendurchmesser einer Partikelgrößenverteilung der Polymerpartikel zwischen 1mm und 9mm, vorzugsweise 1mm bis 5mm zu zerkleinern.

Vorzugsweise sind das Verfahren und der Bandrockner mit der Zerkleinerungsanordnung und/oder Mahlung robust gegenüber Temperaturschwankungen. Vorzugsweise sind der Bandtrockner und das Verfahren ausgebildet, die Polymerpartikel der groben Brocken bei einer Temperatur bei oder über 40°C zu zerkleinern und/oder zu mahlen. Insbesondere sollten die Polymerpartikel bei einer Temperatur zwischen 40°C und 140°C, ganz besonders zwischen zwischen 60°C und 120°C, zerkleinert werden.

Insbesondere ist der erste Zerkleinerer als eine Zerkleinerungsfräse, insbesondere als eine Zerkleinerungsfräse mit Stütztisch, ausgebildet. Insbesondere kann zudem dann der zweite Zerkleinerer als ein Brecher ausgebildet sein, insbesondere als ein Kreuzflügelzerkleinerer. Eine Zerkleinerungsfräse oder sonstige Fräse hat den Vorteil, dass diese jedenfalls bei optimal eingestellten Bedingungen eines getrockneten Polymerstrangs vergleichsweise zufällig bereits fein zerkleinerte Polymerpartikel produzieren kann. Gleichwohl ist eine Zerkleinerungsfräse darauf angewiesen, dass diese bei optimalen Bedingungen betrieben wird

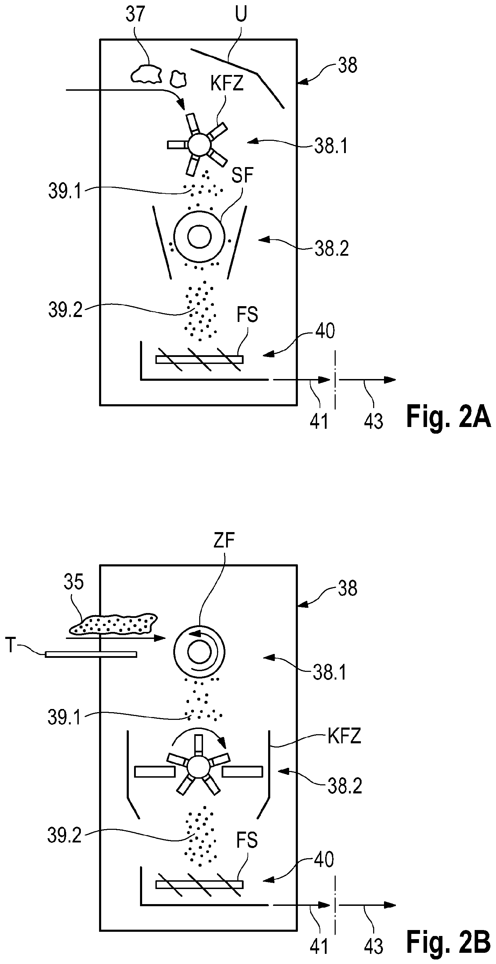

Der erste Zerkleinerer der Zerkleinerungsanordnung ist als ein Brecher ausgebildet, nämlich als ein Kreuzflügelzerkleinerer. Insbesondere kann zudem der zweite Zerkleinerer als eine Schneidfräse ausgebildet sein. Ein Brecher kann beispielsweise als ein Kreuzflügelzerkleinerer oder als ein anderer Brecher gebildet sein und zeichnet sich hier dadurch aus, dass auch recht grobe Brocken in ausreichendem Maße zu jedenfalls groben getrockneten Polymerpartikeln zerkleinert werden können. Ein Brecher kann als erster Zerkleinerer eher robust arbeiten und ist nicht unbedingt auf optimale Bedingungen angewiesen. Eine lediglich beispielhafte Ausführungsform zu dieser Weiterbildung ist in Fig.2A gezeigt.

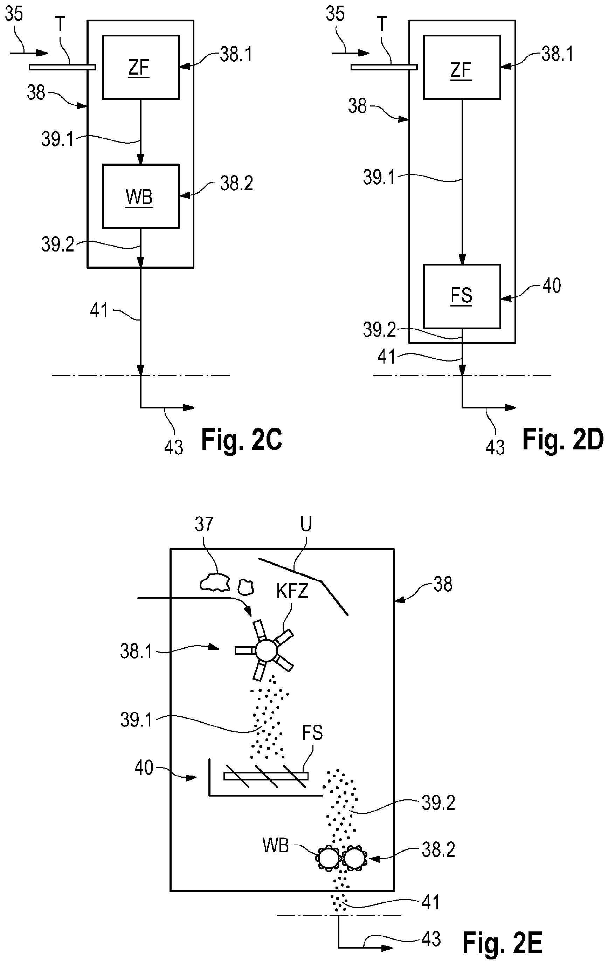

Insbesondere kann in einer Variante der zweite Zerkleinerer als ein Brecher ausgebildet sein; vorzugsweise der erste und zweite Zerkleinerer als ein Brecher ausgebildet sein. Ein Brecher kann beispielsweise als ein Kreuzflügelzerkleinerer oder als ein anderer Brecher gebildet sein. Ein Brecher kann als zweiter Zerkleinerer feiner arbeiten als ein eher robust arbeitender Brecher des ersten Zerkleinerers. Beispielsweise kann ein erster Zerkleinerer einen Brecher in Form eines Kreuzflügelzerkleinerers aufweisen und ein zweiter Zerkleinerer einen Brecher in Form eines Walzenbrechers aufweisen. Zwischen dem ersten und zweiten Zerkleinerer (siehe beispielhafte Ausführungsform zu dieser Weiterbildung Fig.2E) oder nach dem zweiten Zerkleinerer kann eine Förderschnecke angeordnet sein (siehe beispielhafte Ausführungsform zu dieser Weiterbildung Fig.2A, Fig.2B).

Vorzugsweise ist der zweite oder dritte Zerkleinerer als ein Walzenbrecher oder Förderschnecke ausgebildet. Vorzugsweise ist der zweite Zerkleinerer als Walzenbrecher ausgebildet, insbesondere nach einem ersten Zerkleinerer in Form einer Fräse. Eine beispielhafte Ausführungsform zu dieser Weiterbildung ist in Fig.2C gezeigt. Grundsätzlich kann auch der zweite Zerkleinerer als eine Fräse gebildet sein.

Es hat sich auch als vorteilhaft erwiesen, dass der erste Zerkleinerer als ein Brecher und der zweite Zerkleinerer als eine Fräse ausgebildet ist. Diese erste Variante nutzt den Vorteil, dass ein vergleichsweise robust arbeitender Brecher als erster Zerkleinerer gut von einer Zerkleinerungsfräse gefolgt werden kann, um damit fein zerkleinerte getrocknete Polymerpartikel zu liefern. Eine beispielhafte Ausführungsform zu dieser Weiterbildung ist in Fig.2A gezeigt.

Es kann in einer Variante der erste Zerkleinerer als eine Zerkleinerungsfräse und der zweite Zerkleinerer als ein Brecher, insbesondere ein Kreuzflügelzerkleinerer, ein Walzenbrecher oder als eine zerkleinernde Förderschnecke ausgebildet ist. Letztere Variante nutzt den Vorteil einer Zerkleinerungsfräse bereits weitgehend klein zerkleinerte Polymerpartikel zu produzieren. Eine lediglich beispielhafte Ausführungsform zu dieser Weiterbildung ist in FIG.2B, FIG.2C und, FIG.2D gezeigt. Besonders vorteilhaft ist der zweite Zerkleinerer der Zerkleinerungsanordnung in Produktstromrichtung unmittelbar vor der pneumatischen Förderung und/oder vor der Mahlung angeordnet.

Vorteilhaft umfasst die Zerkleinerungsanordnung als dritten Zerkleinerer oder bei Gelegenheit auch als zweiter Zerkleinerer (beispielsweise wie in FIG.2D) eine, vorzugsweise zerkleinernde, Förderschnecke. Eine lediglich beispielhafte Ausführungsform zu dieser Weiterbildung ist in FIG.2A und in FIG.2B und in FIG.2E gezeigt.

Die Förderschnecke fungiert vorteilhaft als zweiter oder dritter Zerkleinerer, vorteilhaft in Produktstromrichtung unmittelbar nach einem ersten Zerkleinerer oder unmittelbar nach einem zweiten Zerkleinerer. Vorteilhaft ist eine Förderschnecke direkt unterhalb des zweiten Zerkleinerers (beispielsweise wie in FIG.2A, FIG.2B) zur Aufnahme von frei fallenden getrockneten Polymerpartikeln angeordnet. Zusätzlich oder alternativ ist eine Förderschnecke vorteilhaft direkt unterhalb des ersten Zerkleinerers (beispielsweise wie in FIG. 2E) zur Aufnahme von frei fallenden getrockneten Polymerpartikeln angeordnet. Die aus dem zweiten Zerkleinerer fallenden feinen zerkleinerten Polymerpartikel können direkt in den dritten Zerkleinerer fallen.

Die Förderschnecke hat vor allem die Funktion einer Produktführung und ist in der Lage den Produktstrom von einer zweidimensionalen Anordnung - wie nach einem Zerkleinerer - auf einen eindimensionalen Produktstrom zusammenzuführen; damit eignet sich eine Förderschnecke zunächst vorteilhaft dazu, den Produktstrom von Polymerpartikeln in einen Eintrag einer weiteren Einheit, wie einer Förderstrecke, oder eines weiteren Zerkleinerers einzubringen.

Vorteilhaft ist ein Kreuzflügelzerkleinerer mit einer rotierbaren Welle mit Funktionsstäben und einem unmittelbar gegenüber der Welle angeordneten feststehenden Stabrost versehen. Insbesondere können die rotierbaren Funktionsstäbe der rotierbaren Welle in Zwischenräume zwischen feststehenden Brechstäben des Stabrostes greifen, um den Trockenkuchen von getrocknetem Polymergel zu zerkleinern. Vorteilhaft ist ein axialer Spalt zwischen einem Funktionsstab und einem Brechstab geringer als die zweifache axiale Breite des Funktionsstabs und/oder als die zweifache axiale Breite des Brechstabs und/oder der axiale Spalt ist geringer als 20mm, insbesondere beträgt er zwischen 8mm bis 12mm.

Vorteilhaft weisen die Brechstäbe einen Axialabstand von nicht mehr als das fünffache einer Stärke bei Funktionsstäben auf, insbesondere nicht mehr als das vier-fache oder drei-fache einer Stärke der Funktionsstäbe.

Zusätzlich oder alternativ können die Funktionsstäbe und/oder die Brechstäbe eine Länge von nicht mehr als das zweifache des Durchmessers der Welle aufweisen. Insbesondere weisen die Funktionsstäbe und/oder Brechstäbe eine Länge von nicht mehr als dem zwei-fachen, insbesondere einfachen Durchmesser der Welle auf.

Vorteilhaft ist ein axialer Spalt zwischen einem Funktionsstab und einem Brechstab geringer als die zweifache axiale Breite des Funktionsstabes und/oder Brechstabes und/oder ein Funktionsstab und Brechstab können gleich stark sein. Dies hat Vorteile bei der Kraftverteilung entlang der Welle. Vorteilhaft ist die Arbeitslinie spiralförmig entlang der Welle; dies hat sich als vorteilhaft für eine Kraftverteilung entlang der Welle erwiesen.

Vorteilhaft ist vorgesehen, dass
- ein Zerkleinerer zum Rotieren der Welle mit einer Umdrehungsgeschwindigkeit von mehr als 50U/min und weniger als 250U/min ausgebildet ist und/oder
- ein Brecher zum Rotieren der Welle mit einer Umdrehungsgeschwindigkeit von mehr als 50U/min, und/oder
- eine Fräse zum Rotieren der Welle mit einer Umdrehungsgeschwindigkeit von mehr als 50U/min ausgebildet ist.

Bevorzugt ist eine Fräse als eine rotierbare Welle mit wenigstens einem Funktionselement ausgebildet, das zum Abfräsen von getrockneten Polymerpartikeln direkt vom Trockenkuchen und/oder vom Polymerstrang des getrockneten Polymerstrang des Trockenkuchens ausgebildet ist, insbesondere ist das Funktionselement mit einem einer Spirale folgenden Arbeitsrand, insbesondere ist das Funktionselement mit Spiralsteg mit einer Zackenzarge oder mit einer spiralförmigen Abfolge von Schaufelstirnflächen ausgebildet. Vorzugsweise weist die Spirale eine einzige oder zwei oder mehr gegenläufige Gewindegänge auf.

Bevorzugt ist vorgesehen, dass die Fräse eine rotierbare Welle mit wenigstens einem Funktionsstab oder sonstigen Funktionswerkzeugen aufweist, die zum Abfräsen von getrockneten Polymerpartikeln direkt vom Trockenkuchen ausgebildet sind. Bevorzugt sind eine Anzahl von Funktionsstäben oder sonstige Funktionswerkzeuge entlang einem einer Spirale folgenden Arbeitsrand angeordnet. Insbesondere kann die Spirale einen Steigungswinkel gegen eine Querschnittsfläche aufweisen, der zwischen 20° bis 70° liegt.

Vorzugsweise ist der erste Zerkleinerer mit einem oberen Arbeitsrand ausgestattet. Insbesondere kann der obere Arbeitsrand im Falle eines Brechers auf Höhe oder unterhalb der Höhe einer Aufnahmefläche des Förderbandes zur Aufnahme des Abwurfes des Trockenkuchens angeordnet sein.

Alternativ ist der erste Zerkleinerer als eine Fräse ausgebildet und der obere Arbeitsrand der Fräse ist auf Höhe oder oberhalb der Höhe einer Aufnahmefläche des Förderbandes zur fräsenden Bearbeitung des Trockenkuchens und Unterstützung des Abwurfs des Trockenkuchens nach unten angeordnet.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee und dem Konzept der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein.

Bei angegebenen Bemessungsbereichen sollen auch innerhalb der genannten Grenzen beliebige Werte als Grenzwerte offenbart und beliebig einsetzbar und beanspruchbar sein. Weitere Vorteile, Merkmale und Einzelheiten der Erfindung ergeben sich aus der nachfolgenden Beschreibung, der bevorzugten Ausführungsbeispiele sowie anhand der Zeichnung.

Im Einzelnen zeigt die Zeichnung in:
- FIG.1: eine schematische Darstellung einer Herstellungsanordnung zur Herstellung wasserabsorbierender Polymerpartikel mit einem Bandtrockner und einer Zerkleinerungsanordnung hinter dem Bandtrockner, zum Zerkleinern eines Trockenkuchens von getrocknetem Polymergel zu getrockneten Polymerpartikeln in Produktstromrichtung aus dem Bandtrockner und in Produktstromrichtung vor einer pneumatischen Förderung und vor einer Mahlung;
- FIG.2A, FIG.2B, FIG.2C, FIG.2D, FIG.2E: schematisch dargestellte Varianten der Zerkleinerungsanordnung der FIG.1
- mit drei Zerkleinerern in der Zerkleinerungsanordnung: in 2A: Kreuzflügelzerkleinerer, Schneidmühle, Förderschnecke in 2B: Zerkleinerungsfräse mit Tisch für Trockenkuchen, Kreuzflügelzerkleinerer, Förderschnecke;
- mit zwei Zerkleinerern in der Zerkleinerungsanordnung: in 2C: Zerkleinerungsfräse mit Tisch für Trockenkuchen, Walzenbrecher,
   in 2D: Zerkleinerungsfräse mit Tisch für Trockenkuchen, Förderschnecke;
- mit drei Zerkleinerern in der Zerkleinerungsanordnung: in 2E: Kreuzflügelzerkleinerer, Förderschnecke, Walzenbrecher;

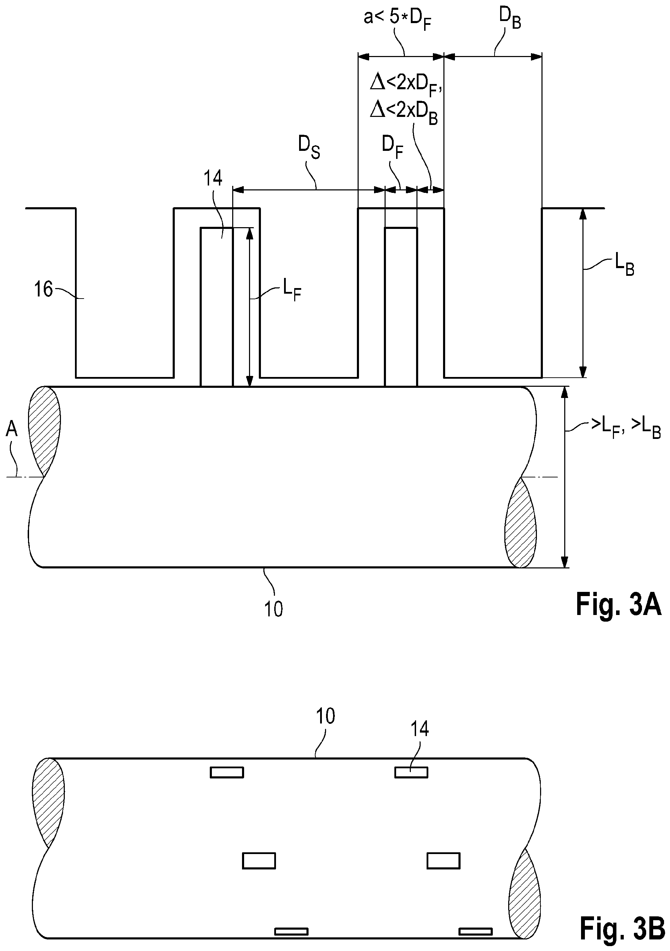

- FIG.3A, FIG.3B: ein Schema eines Brechers in Form eines Kreuzflügelzerkleinerers mit einer rotierbaren Welle mit Funktionsstäben
in 3A: in einer Draufsicht mit angegebenen Abstandswerten, und
in 3B: in einer perspektivischen Ansicht die Welle mit einer schematischen Darstellung einer Anordnung von sich mit drehenden Barren oder Stäben;

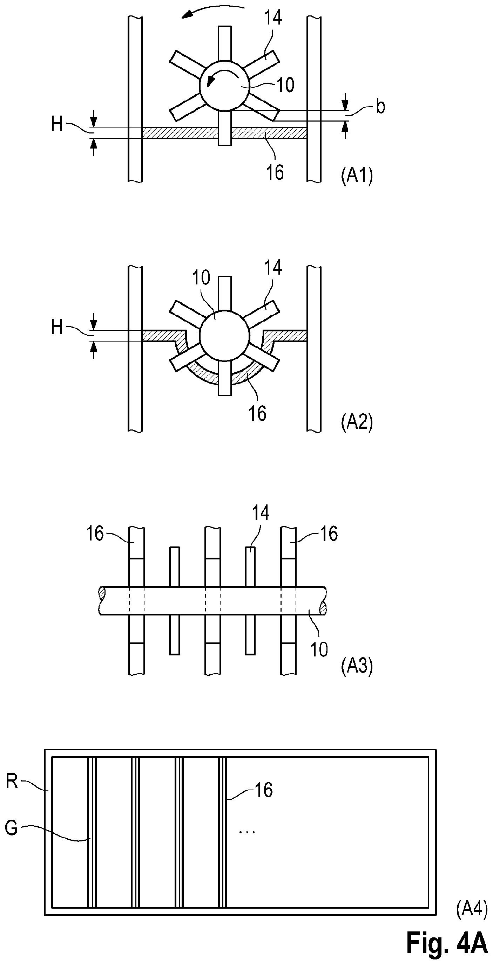

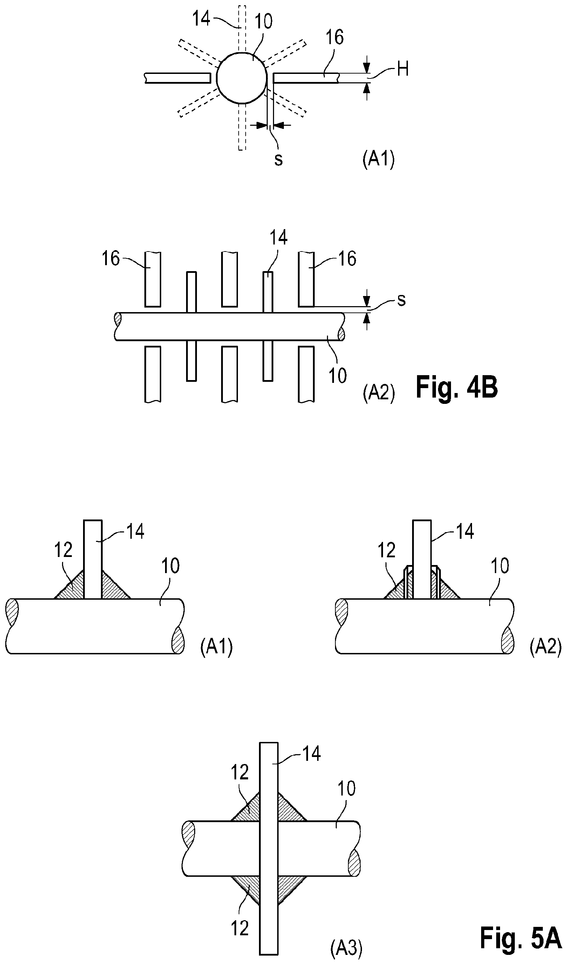

- FIG.4A, FIG.4B: zwei Varianten eines Brechers jeweils in Form eines Kreuzflügelzerkleinerers mit einer rotierbaren Welle mit Funktionsstäben eines Brechers
in 4A: mit einem durchgehenden Stabgitter von festen Stäben, die beidseitig der Welle festgemacht sind, nämlich
   - eine erste Abwandlung in Ansicht (A1), eine zweite Abwandlung in Ansicht (A2), eine Aufsicht für die zweite Abwandlung in Ansicht (A3), das Stabgitter mit Rahmen in Ansicht (A4);
in 4B: mit einem unterbrochenen Stabgitter von festen Stäben, die einseitig der Welle festgemacht sind, nämlich
   - eine erste Abwandlung in Ansicht (A1), eine Aufsicht für die erste Abwandlung in Ansicht (A2);

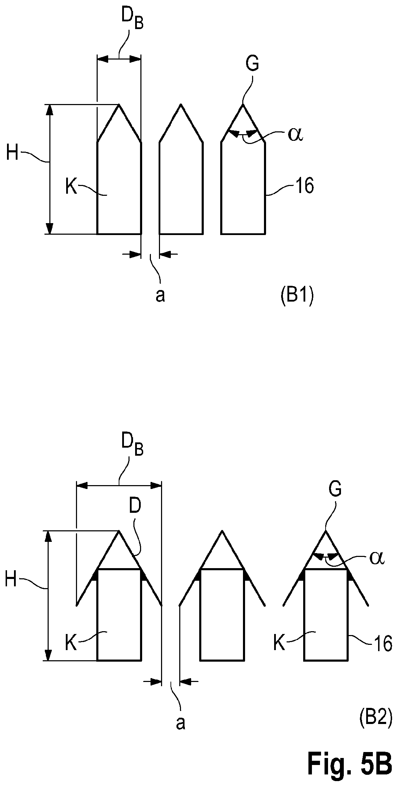

- FIG.5A, FIG.5B: in 5A: Details einer rotierbaren Welle mit Funktionsstäben eines Brechers in Form eines Kreuzflügelzerkleinerers in drei Abwandlungen (A1), (A2) und (A3);
in 5B: Details eines Stabgitters der Fig.4A oder Fig.4B mit feststehenden Brechstäben bei dem Kreuzflügelzerkleinerer in zwei Abwandlungen (B1), (B2);

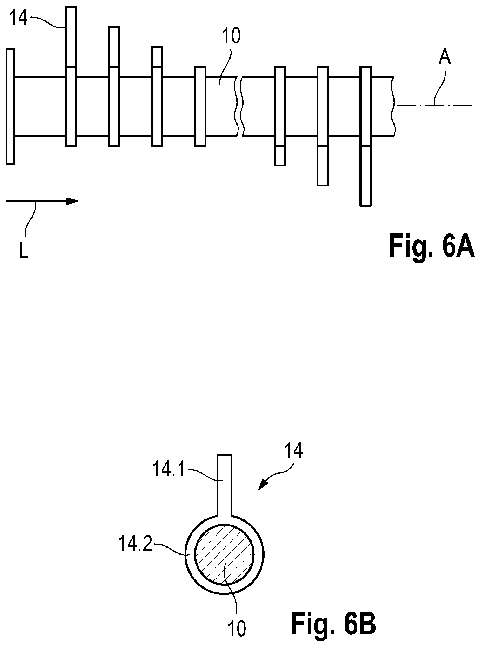

- FIG.6A, FIG.6B: Details einer rotierbare Welle mit als Barren ausgebildeten Funktionsstäben; diese kann als Fräse zum Abfräsen von getrockneten Polymerpartikeln direkt vom Trockenkuchen ausgebildet sein,
in 6A: in einer perspektivischen Ansicht;
in 6B: in einer Vergrößerung mit einer Seitenansicht eines Funktionsstabs;
- FIG. 7A, FIG.7B: eine kumulierte Auftragung von Massenanteilen der Siebfraktionen zur graphischen Bestimmung des Massenmittel Teilchendurchmessers nach (Fig.7A) Zerkleinerung und (Fig.7B) Mahlung, insbesondere zur Erläuterung eines analogen Vorgehens zur Bestimmung der Massenmittel Teilchendurchmesser nach Mahlung anhand von drei Beispielen.

In der Zeichnung sind für gleiche oder ähnliche Teile oder Teile gleicher oder ähnlicher Funktion der Einfachheit halber gleiche Bezugszeichen benutzt.

Ein Herstellungsverfahren für SAP weist beispielsweise die Schritte auf:
- Prozessieren einer Monomer-Lösung oder -Suspension unter Polymerisation zu einem wässrigen Polymergel,
- Trocknen des wässrigen Polymergels in einem Bandtrockner, wobei der Bandtrockner ein zirkulierendes Transportband hat und das wässrige Polymergel auf dem Transportband gefördert wird.
   Bevorzugt ist dabei, dass
      - das Transportband als ein Plattentransportband gebildet ist, aufweisend eine Anzahl von Bandplatten die an einer Gelenklinie einer Gelenkkonstruktion getrennt sind und wobei jede Bandplatte eine Oberfläche zur Aufnahme des wässrigen Polymergels hat.
   Insbesondere kann dieses Herstellungsverfahren umfassen: Prozessieren einer Monomer-Lösung oder
      - Suspension unter Polymerisation zu einem vernetzten wässrigen Polymergel.

Im Rahmen einer besonders bevorzugten Weiterbildung wurde erkannt, dass das Konzept der Erfindung oder einer seiner Weiterbildungen von besonderem Vorteil ist für einen speziellen Herstellungsprozess für Superabsorber, insbesondere für einen speziellen Herstellungsprozess für ein Polymergel für Superabsorber, der im folgenden mit einigen Weiterbildungen beschrieben wird und zum Teil auch in WO2011/104152 und WO2006/100300 A1 näher erläutert ist, deren Offenbarungsgehalt hiermit durch Zitat in den Offenbarungsgehalt der vorliegenden Anmeldung aufgenommen ist.

Insbesondere betrifft dies ein Herstellungsverfahren zur Herstellung wasserabsorbierender Polymerpartikel mit Polymerisation einer Monomer-Lösung oder -Suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
optional ein oder mehrere wasserlösliche Polymere.

Die wasserabsorbierenden Polymerpartikel werden mit Polymerisation einer Monomer-Lösung oder -Suspension hergestellt und sind wasserunlöslich.

Das wässrige Polymergel wird dann vorzugsweise mit einem Bandtrockner getrocknet bis sich ein gewünschter, bevorzugt niedriger Wassergehalt einstellt, insofern insbesondere ein Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Mass Loss Upon Heating" bestimmt wird. Bei einer zu hohen Restfeuchte weist das getrocknete Polymergel eine zu niedrige Glasübergangstemperatur Tg auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird pneumatisch gefördert, gemahlen und klassiert. Zur Mahlung können ein- oder mehrstufige Walzenstühle, bevorzugt zwei- oder dreistufige Walzenstühle, Stiftmühlen, Hammermühlen oder Schwingmühlen, eingesetzt werden.

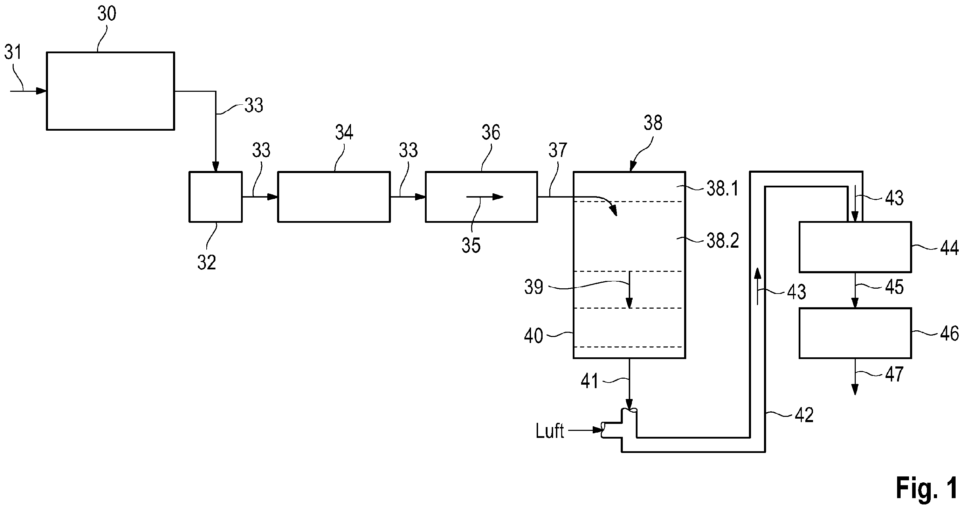

FIG.1 zeigt eine schematische Darstellung eines Herstellungsprozesses für Poly(meth)acrylate; d.h. allgemein SAP. Der schematischen Darstellung in FIG.1 kann der Ablauf eines Herstellungsverfahrens für Poly(meth)acrylate bis zu getrockneten Polymerpartikeln entnommen werden.

Die Edukte 31 zur Herstellung der Poly(meth)acrylate werden beispielsweise in einen Mischkneter, Bandreaktor oder sonstigen Reaktor 30 eingegeben. Der Mischkneter umfasst beispielsweise zwei achsparallele, rotierenden Wellen, auf deren Oberflächen-Scheibenflächen mit an ihrem Umfang angeordneten Knetbarren aufgenommen sind. In einer Polymerisierungsreaktion wird als Produkt Poly(meth)acrylat erzeugt, welches den Reaktor 30 in Form von Klumpen 33 mit gelartiger Konsistenz verlässt. Die Klumpen 33 gelangen in einen Gelbunker 32, von dem aus die Klumpen mit einem Schwenkband oder dergleichen Fördermittel 34 auf ein nicht dargestelltes Förderband eines Bandtrockners 36 aufgetragen werden, d.h. als superabsorbierendes Polymer im Zustand eines wässrigen Polymergels von noch wässrigen Polymergelpartikeln 33. Durch den Bandtrockner 36 wird den wässrigen Polymergelpartikeln auf dem Förderband bei einer Temperatur von bis zu 200°C Flüssigkeit entzogen, sodass diese als teilgetrocknete, d.h. noch feuchte Polymergelpartikel, auf dem Förderband durch den Bandtrockner gefördert werden.

Die getrockneten Poly(meth)acrylatBrocken gelangen als getrocknete Polymergelpartikel eines brettartigen festen Trockenkuchens 35 an den Ausgang des Bandtrockners. Der Trockenkuchen 35 gelangt anschließend in eine Zerkleinerungsanordnung 38. In der Regel bricht der Trockenkuchen 35 am Ende des Förderbandes; dann gelangen grobe Bruchstücke oder Brocken 37 anschließend in eine Zerkleinerungsanordnung 38. Soweit der Trockenkuchen 35 ohne zu brechen, d.h. im Ganzen, bereits an eine Fräse einer Zerkleinerungsanordnung 38 gelangt, werden zerkleinerte Polymerpartikel direkt vom Trockenkuchen 35 abgefräst. Es können aber grundsätzlich auch Bruchstücke des Trockenkuchens 35 oder sonstige grobe Brocken 37 von der Fräse zu zerkleinerten Polymerpartikeln zerfräst werden.

Anstatt einer Zerkleinerungsanordnung ist beispielsweise gemäß WO2013/072419 nur ein als Kreuzflügelzerkleinerer ausgeführter Zerkleinerer vorgesehen.

Ein Kreuzflügelzerkleinerer umfasst beispielsweise eine Welle 10, an der eine Vielzahl von Funktionsstäben 14 aufgenommen sind. Die Funktionsstäbe 14 sind mit der Welle 10 verschweißt.

Neben den auf der Welle 10 angeordneten Funktionsstäben 14, umfasst der Kreuzflügelzerkleinerer eine Vielzahl fest montierter Barren die in Zwischenräume der auf der Welle angeordneten Funktionsstäbe 14 eingreifen. Die in den Zerkleinerer eingegebenen Poly(meth)acrylat-Brocken aus getrockneten Polymerpartikeln des Trockenkuchens fallen auf die fest montierten Barren und bleiben auf diesen liegen. Durch die sich mit der Welle 10 mitdrehenden Funktionsstäbe 14 werden die Brocken zerschlagen. Nach dem Passieren des Kreuzflügelzerkleinerers werden die grob zerkleinerten getrockneten Polymerpartikeln über ein pneumatisches Transportsystem z.B. einer Mahlung oder dergleichen mit einer Mühle zugeführt. Dort werden die Poly(meth)acrylat-Partikel weiter zermahlen bis das Produkt in Form eines Pulvers entsteht.

Problematisch bei dieser zwar vergleichsweise einfach und effizient ausgelegten Anlagenform mit lediglich einem Kreuzflügelzerkleinerer ist jedoch, dass es an einer ausreichend feinen Zerkleinerung des Kuchens 35 bzw. der Bruchstücke 37 mittels dem lediglich einen Kreuzflügelzerkleinerer mangeln kann. Es ist nämlich, abhängig von dem zu trocknenden Produkt und den Trocknungsbedingungen und dem Durchsatz des Bandtrockners, durchaus von ggf. unterschiedlicher Härte des Trockenkuchens 35 auszugehen. So kann je nach Dimensionierung ein allein vorgesehener Kreuzflügelzerkleinerer ggf. nicht ausreichend sein, fein zerkleinerte Bruchstücke zur Verfügung zu stellen. Diese könnten beispielsweise durch einen zu groß dimensionierten Abstandsbereich zwischen den Barren des Kreuzflügelzerkleinerers fallen oder sie könnten einfach auf diesem liegenbleiben. Beide Fälle erweisen sich als unvorteilhaft für den Betrieb der Anlage.

Insbesondere für den Fall, dass zu grobe Brocken in das pneumatische Transportsystem gelangen, könnte dies zu Transportproblemen führen. Insbesondere könnten zu grobe Brocken von der im weiteren Förderbereich vorgesehenen Mahlung nur unvorteilhaft verarbeitet werden oder gar nicht eingezogen werden.

Es ist deshalb durch die Zerkleinerungsanordnung 38 der FIG.1 --mit wenigstens einem ersten und einem zweiten Zerkleinerer 38.1, 38.2-- sichergestellt, dass zunächst grob zerkleinerte Brocken aus dem ersten Zerkleinerer im zweiten Zerkleinerer ausreichend fein zerkleinert werden, um für das pneumatische Transportsystem förderbar und von einer Mühle gut mahlbar zu sein. Zu den Details einer Zerkleinerungsanordnung 38 der FIG.1 wird noch in Bezug auf die weiteren FIG.2 bis FIG.6 im Detail erläutert.

Vorliegend werden getrocknete Polymerpartikel --d.h. ausreichend für die pneumatische Förderung und für einen Mahlvorgang zerkleinerte Brocken sowie unvermeidbare Bruchreste, die hier zusammen mit dem Bezugszeichen 39 versehen sind-optional einem Förder-und/oder Vergleichmäßigungs-Mittel, optional einem dritten Zerkleinerer, 40 zugeführt, das bevorzugt eine Vergleichmäßigung des Hauptstroms des Gutprodukts vorsieht; dies kann beispielsweise eine Förderschnecke FS oder dergleichen sein.

Die insofern gut zerkleinerten und vergleichmäßigten getrockneten Polymerpartikel des Hauptstroms 41 werden alsdann einer pneumatischen Förderung 42 zugeführt, und diese ausreichend zerkleinerten Polymerpartikel im vergleichmäßigten Produktstrom der pneumatischen Förderung werden mit dem Bezugszeichen 43 bezeichnet. Diese getrockneten Polymerpartikel 43 werden dann einer Mahlung 44 mit einer Mühle für einen Mahlvorgang zugeführt und dort gemahlen und gelangen als gemahlene, getrocknete Polymerpartikel 45 in eine Siebvorrichtung 46. Nach der Siebvorrichtung 46 verlassen die gesiebten, gemahlenen, und getrockneten Polymerpartikel 47 mit einer gewünschten Partikelgrößenverteilung der Gutfraktion die Siebvorrichtung, und diese gesiebten, gemahlenen, getrockneten Polymerpartikel 47 werden ggf. einer weiteren Behandlung, etwa einer Oberflächennachvernetzung sowie einem anschließenden Trocknungsvorgang oder sonstigem thermischen Behandlungsvorgang zugeführt und nach einer Schutzsiebung als Produkt zur Verfügung gestellt. Etwaige Fraktionen mit Überkorn nach der Siebvorrichtung 46 können nochmals einer Mahlung 44 in der Mühle zugeführt werden, bis sie eine gewünschte Partikelgrößenverteilung der Gutfraktion aufweisen.

Der Anteil an Polymerpartikeln mit einer Partikelgröße von größer 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (entspricht einem SFC-Wert als Maß für die Permeabilität von Flüssigkeit zwischen Polymerpartikeln; Messmethode z.B. EP 0 752 892 B1 S.33-36 [0224]-[0251]. Daher sollte der Anteil zu kleiner Polymerpartikel ("fines") niedrig sein.

Zu kleine Polymerpartikel werden daher abgetrennt und in das Herstellungsverfahren rückgeführt. Die Rückführung erfolgt vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Herstellungsverfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise im letzten Drittel des Knetreaktors zugesetzt.

Werden die zu kleinen Polymerpartikel sehr früh zugesetzt, beispielsweise bereits zur Monomer-Lösung, so wird dadurch die Zentrifugenretentionskapazität (entspricht einem CRC-Wert als Maß für die Wasseraufnahmekapazität; Messung analog zu ISO 17109-6:2001) der erhaltenen wasserabsorbierenden Polymerpartikel gesenkt. Dies kann zwar beispielsweise durch Anpassung der Einsatzmenge an Vernetzer b) kompensiert werden. Die zu kleinen Polymerpartikel können auch später zugesetzt werden, könnten dann aber ggfs. nur unzureichend eingearbeitet werden.

Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindestens 95 Gew.-%, ganz besonders bevorzugt mindestens 98 Gew.-%. Alternativ beträgt der Anteil an Partikeln mit einer Partikelgröße von höchstens 600 µm, vorzugsweise mindestens 90 Gew.-%, besonders bevorzugt mindesten 95 Gew.-%, ganz besonders bevorzugt mindestens 98 Gew.-%. Polymerpartikel mit zu großer Partikelgröße senken die Anquellgeschwindigkeit. Daher sollte der Anteil zu großer Polymerpartikel ebenfalls niedrig sein. Zu große Polymerpartikel werden daher abgetrennt und in die Mahlung des getrockneten Polymergels rückgeführt.

Gemäß dem Konzept der Erfindung werden zur oben beschriebenen Fig.1 im folgenden anhand von Fig.2 ff. bevorzugte Zerkleinerungsanordnungen beschrieben, welche das getrocknete Polymergel als Polymerstrang nach der Trocknung bzw. nach einem Bandtrockner in verbesserter Weise zu getrockneten Polymerpartikeln zerkleinern - jedenfalls zu einem Massenmittel Teilchendurchmessern deutlich oberhalb 1mm. Insbesondere sollen die getrockneten Polymerpartikel im Rahmen des verbesserten Zerkleinerungsverfahrens für das getrocknete Polymergel als Polymerstrang mit einer für eine anschließende pneumatische Förderung und/oder Mahlung geeigneten bzw. bestimmten Partikelgröße zerkleinert werden.

FIG.2 zeigt in Ansichten (A) bis (E) bevorzugte Ausführungsformen der Kombination einer Zerkleinerungsanordnung 38 mit einem ersten Zerkleinerer 38.1 und einem zweiten Zerkleinerer 38.2 sowie optional einer Förderschnecke FS oder einem anderen Förder- und/oder Vergleichmäßigungs-Mittel, das optional auch als dritter Zerkleinerer zur weiteren Zerkleinerung und Vergleichmäßigung des Produktstroms dienen kann.

FIG.2A und FIG.2B und FIG. 2E zeigen insofern zunächst eine Zerkleinerungsanordnung 38 mit einem ersten Zerkleinerer 38.1, einem zweiten Zerkleinerer 38.2 und einer Förderschnecke FS als Förder-und/oder Vergleichmäßigungs-Mittel 40. Die Zerkleinerungsanordnung umfasst vorliegend optional im Grunde drei Zerkleinerer, für den Fall, dass die Förderschnecke FS hier nicht nur zur Vergleichmäßigung, sondern zusätzlich zur weiteren Zerkleinerung der getrockneten Polymerpartikel ausgelegt ist.

FIG.2C zeigt eine Zerkleinerungsanordnung 38 nur mit einem ersten Zerkleinerer 38.1 und einem zweiten Zerkleinerer 38.2, d.h. hier vor allem ohne Förderschnecke.

FIG.2D zeigt eine Zerkleinerungsanordnung 38 nur mit einem ersten Zerkleinerer 38.1 und einer Förderschnecke FS als Förder-und/oder Vergleichmäßigungs-Mittel 40, die zudem zur weiteren Zerkleinerung der getrockneten Polymerpartikel aus dem ersten Zerkleinerer ausgelegt ist, d.h. als zweiter Zerkleinerer 38.2.

Zunächst Bezug nehmend auf FIG.2A zeigt diese als Teil der Zerkleinerungsanordnung 38 --zur insofern dreistufigen Zerkleinerung des Bruchs 37 des Trockenkuchens 35 von getrockneten Polymerpartikeln-- einen ersten Zerkleinerer 38.1 in Form eines Kreuzflügelzerkleinerers (auch als Pinkicker oder Stabbrecher oder eine sonstige Brechmühle oder Stachelwalze bezeichnet) mit einem Umlenkmittel U. Die Zerkleinerungsanordnung 38 weist weiter einen zweiten Zerkleinerer 38.2 in Form einer Schneidfräse SF auf. Die Zerkleinerungsanordnung 38 weist weiter eine zur weiteren Zerkleinerung ausgelegte Förderschnecke FS auf, die als Förder-und/oder Vergleichmäßigungs-Mittel 40 zudem zur Vergleichmäßigung des Produktstroms dient.

Die getrockneten Polymerpartikel 37 des getrockneten Polymerstrangs des Trockenkuchens 35 gelangen bei der Ausführungsform der FIG.2A als Bruch auf den ersten Zerkleinerer 38.1 und verlassen diesen als grob zerkleinerte Brocken 39.1 von getrockneten Polymerpartikeln. Die groben Brocken 39.1 der getrockneten Polymerpartikel gelangen in eine Schneidfräse SF als zweiten Zerkleinerer 38.2 und werden dort weiter zu feineren Brocken 39.2 zerkleinert. Die feineren Brocken 39.2 der getrockneten Polymerpartikel fallen schließlich in die Förderschnecke FS als Förder-und/oder Vergleichmäßigungs-Mittel 40 und werden durch den Fördervorgang zu einem vergleichmäßigten Strom von fein zerkleinerten Polymerpartikeln 41 gefördert. Diese fein zerkleinerten und ausreichend vergleichmäßigten getrockneten Polymerpartikel 41 gelangen dann als Produktstrom 43 in die pneumatische Förderung.

FIG.2B zeigt eine weitere Ausführungsform einer Zerkleinerungsanordnung 38 mit einem ersten Zerkleinerer 38.1 in Form einer Fräse, Fräswalze oder sonstigen Zerkleinerungsfräse ZF. Soweit der Trockenkuchen 35 ohne zu brechen, d.h. im Ganzen, bereits an die Zerkleinerungsfräse ZF der Zerkleinerungsanordnung 38 gelangt, werden zerkleinerte Polymerpartikel direkt vom Trockenkuchen 35 abgefräst. Es können aber grundsätzlich auch Bruchstücke des Trockenkuchens 35 oder sonstige grobe Brocken 37 von der Zerkleinerungsfräse ZF zu zerkleinerten Polymerpartikeln zerfräst werden. Der Trockenkuchen 35 und/oder grobe Brocken 37 werden also in der Zerkleinerungsfräse ZF des ersten Zerkleinerers 38.1 zu zerkleinerten Polymerpartikeln zerfräst und damit bereits recht fein zerkleinert und verlassen als zerkleinerte getrocknete Polymerpartikel 39.1 die Zerkleinerungsfräse ZF. Damit möglichst der Trockenkuchen 35 ohne zu brechen, d.h. im Ganzen, bereits an die Zerkleinerungsfräse ZF der Zerkleinerungsanordnung 38 gelangt ist vorliegend ein Tisch T oder sonstige Stütze vorgesehen, welcher in gedachter Verlängerung des Förderbandes den Trockenkuchen 35 unterstützt und diesen ohne zu brechen an die Zerkleinerungsfräse ZF führt.

Gleichwohl kann auch bei einer solchen Zerkleinerungsfräse ZF, je nach Beschaffenheit des Trockenkuchens 35 nicht grundsätzlich ausgeschlossen werden, dass grobe Brocken auch neben die Zerkleinerungsfräse ZF gelangen oder die Zerkleinerungsfräse --je nach Härte des Trockenkuchens 35 und damit der Konsistenz des Trockenkuchens 35 oder der groben Brocken 37-- unterschiedlich zerkleinert.

Es können in dem Produktstrom von Polymerpartikeln 39.1 zerfräste und damit bereits recht fein zerkleinerte Polymerpartikel auch unzureichend zerkleinerte Polymerpartikel vorhanden sein. Diese können zusammen als vorläufig zerkleinerter Produktstrom von Polymerpartikeln 39.1 auf den zweiten Zerkleinerer 38.2 gelangen. Der zweite Zerkleinerer 38.2 ist hier als Kreuzflügelzerkleinerer (auch Pinkicker, Stabbrecher oder Stachelwalze) ausgeführt. Die fein zerkleinerten Polymerpartikel 39.2 entstehen somit aus den bereits am Eingang des zweiten Zerkleinerers 38.2 vorliegenden kleineren Polymerpartikein als auch aus den noch gröberen Polymerpartikeln, die zusammen mit 39.1 bezeichnet wurden.

Die somit fein zerkleinerten getrockneten Polymerpartikel 39.2 gelangen dann in die Förderschnecke FS, wobei die Förderschnecke FS als Förder-und/oder Vergleichmäßigungs-Mittel 40 nicht nur zur Vergleichmäßigung, sondern auch noch zur weiteren Zerkleinerung der getrockneten Polymerpartikel 39.2 ausgelegt ist. Am Ende der Förderschnecke FS liegt also ein Produktstrom von ausreichend fein zerkleinerten und vergleichmäßigten getrockneten Polymerpartikeln 41 vor, der als solcher dann als ausreichend zerkleinerte und vergleichmäßigte Polymerpartikel 43 in die pneumatische Förderung abgegeben wird.

FIG.2C zeigt eine dritte Ausführungsform einer Zerkleinerungsanordnung 38 mit lediglich einem ersten Zerkleinerer 38.1 in Form einer Zerkleinerungsfräse ZF und einem zweiten Zerkleinerer 38.2 in Form eines Walzenbrechers WB. Soweit der Trockenkuchen 35 ohne zu brechen, d.h. im Ganzen, bereits an die Zerkleinerungsfräse ZF der Zerkleinerungsanordnung 38 gelangt, werden zerkleinerte Polymerpartikel direkt vom Trockenkuchen 35 abgefräst. Es können aber grundsätzlich auch Bruchstücke des Trockenkuchens 35 oder sonstige grobe Brocken 37 von der Zerkleinerungsfräse ZF zu zerkleinerten Polymerpartikeln zerfräst werden. Der Trockenkuchen 35 und/oder grobe Brocken 37 werden also in der Zerkleinerungsfräse ZF des ersten Zerkleinerers 38.1 zu zerkleinerten Polymerpartikein zerfräst und damit bereits recht fein zerkleinert und verlassen als zerkleinerte getrocknete Polymerpartikel 39.1 die Zerkleinerungsfräse ZF.

Damit möglichst der Trockenkuchen 35 ohne zu brechen, d.h. im Ganzen, bereits an die Zerkleinerungsfräse ZF der Zerkleinerungsanordnung 38 gelangt ist vorliegend auch hier ein Tisch T oder sonstige Stütze vorgesehen, welcher in gedachter Verlängerung des Förderbandes den Trockenkuchen 35 unterstützt und diesen ohne zu brechen an die Zerkleinerungsfräse ZF führt.

Der Trockenkuchen 35 als Ganzes und/oder ggfs. grobe Brocken 37 des getrockneten Polymerstrangs des Trockenkuchens 35 gelangen also zunächst in die Zerkleinerungsfräse ZF und verlassen diese als zerkleinerte Polymerpartikel 39.1. Diese zunächst zerkleinerten Polymerpartikel 39.1 gelangen in einen Walzenbrecher WB und verlassen diesen als fein zerkleinerte Polymerpartikel 39.2.

Optional kann auch hier eine Förderschnecke FS als Förder-und/oder Vergleichmäßigungs-Mittel 40 als dritter Zerkleinerer wirken. Jedenfalls wird der Produktstrom von fein zerkleinerten Polymerpartikeln 39.2 vergleichmäßigt, sodass ein Produktstrom von fein zerkleinerten und vergleichmäßigten getrockneten Polymerpartikeln 41 die Förderschnecke FS verlässt und als zerkleinerte, getrocknete Polymerpartikel 43 in die pneumatische Förderung 42 gegeben wird.

Es zeigt sich, dass bei diesem Einsatz eines Walzenbrechers WB der Produktstrom von fein zerkleinerten Polymerpartikeln 39.2 bereits ausreichend vergleichmäßigt ist. Vorteilhaft kann dieser Partikelstrom von ausreichend vergleichmäßigten, fein zerkleinerten getrockneten Polymerpartikeln 39.2 bereits in die pneumatische Förderung 42 gegeben werden; also ohne eine Förderschnecke. Die Kombination einer Zerkleinerungsfräse als ersten und mit einem Walzenbrecher als zweiten Zerkleinerer führt zu einer Zerkleinerungsanordnung 38 mit zwei Zerkleinerern für einen ausreichend fein zerkleinerten und vergleichmäßigten Produktstrom von getrockneten Polymerpartikeln 41 für eine pneumatische Förderung 42 und anschließende Mahlung 44.

FIG.2D zeigt eine vierte Ausführungsform einer Zerkleinerungsanordnung 38 mit einer Zerkleinerungsfräse ZF als ersten Zerkleinerer 38.1 - hier analog z.B. der Ausführungsform der FIG.2C für einen resultierenden bereits recht gut zerkleinerten Produktstrom von getrockneten Polymerpartikeln 39.1. Diese gelangen in eine zerkleinernd wirkende Förderschnecke FS als Förder-und/oder Vergleichmäßigungs-Mittel 40 und werden dort nochmals weiter zerkleinert, und der Produktstrom wird außerdem in der Förderschnecke 40 vergleichmäßigt. Damit verlässt die Zerkleinerungsanordnung wiederum ein ausreichend vergleichmäßigter Produktstrom von ausreichend fein zerkleinerten, getrockneten Polymerpartikeln 41 in eine pneumatische Förderung 42 und anschließende Mahlung 44 gegeben werden. In der pneumatischen Förderung 42 ist der Produktstrom von Polymerpartikeln mit 43 bezeichnet. Diese vergleichsweise einfach aufgebaute Zerkleinerungsanordnung nutzt vorteilhaft, dass die Förderschnecke nicht nur ein Vergleichmäßigungs-mittel ist, sondern zudem als Zerkleinerungsmittel wirkt.

Bezug nehmend auf FIG.2E zeigt diese als Teil der Zerkleinerungsanordnung 38 --zur insofern dreistufigen Zerkleinerung des Bruchs 37 des Trockenkuchens 35 von getrockneten Polymerpartikeln-- einen ersten Zerkleinerer 38.1 in Form eines Kreuzflügelzerkleinerers (auch als Pinkicker oder Stabbrecher oder eine sonstige Brechmühle oder Stachelwalze bezeichnet) mit einem Umlenkmittel U. Die Zerkleinerungsanordnung 38 weist weiter eine Förderschnecke FS auf, die als Förder-und/oder Vergleichmäßigungs-Mittel 40 optional auch als weiterer Zerkleinerer, dienen kann, die aber jedenfalls den Produktstrom 39.1 von Polymerpartikeln vergleichmäßigt und als Produktstrom 39.2 von Polymerpartikeln zur Verfügung stellt. Diesen bereits ausreichend vergleichmäßigten Produktstrom 39.2 nimmt ein zweiter Zerkleinerer 38.2 in Form eines Walzenbrechers WB auf. Der Produktstrom 41 von fein zerkleinerten Polymerpartikeln nach dem Walzenbreeher WB ist erst recht ausreichend vergleichmäßigt. Dieser wird mittels der pneumatischen Förderung 42 als Partikelstrom 43 von ausreichend vergleichmäßigten, fein zerkleinerten getrockneten Polymerpartikeln in eine Mahlung 44 gegeben werden.

Die zuvor beschriebenen Ausführungsformen der FIG.1 bis FIG.2E sehen allesamt vor, dass selbst bei veränderlichen Eigenschaften des getrockneten Polymerstranges eines Trockenkuchens 35 und selbst bei nicht optimierter Geometrie eines Brechers oder einer Zerkleinderungsfräse ZF ein ausreichend fein zerkleinerter Strom von getrockneten Polymerpartikeln 39 bzw. 39.2 für eine pneumatische Förderung 42 und einer Mahlung 44 vorliegt, der diesen als vergleichmäßigter fein zerkleinerter Strom von getrockneten Polymerpartikeln 43 zugeführt werden kann.

Die relative Anordnung eines dafür vorgesehenen ersten und zweiten Zerkleinerers 38.1, 38.2 ist grundsätzlich auf unterschiedliche Weise realisierbar. Es hat sich jedoch gezeigt, dass es vorteilhaft ist, dass die Zerkleinerungsanordnung wenigstens einen ersten Zerkleinerer und einen zweiten Zerkleinerer mit jeweils einer rotierenden Walze aufweist (dazu gehört als jeweils ein Brecher, eine Fräse oder eine Förderschnecke bzw. bei zwei rotierenden Walzen auch vor allem ein Walzenbrecher).

Hinsichtlich der geometrischen Anordnung hat es sich als vorteilhaft erwiesen, dassbezüglich des Produktstroms-- der zweite Zerkleinerer in Produktstromrichtung unmittelbar nach dem ersten Zerkleinerer angeordnet ist, d.h. die aus dem ersten Zerkleinerer gelangenden grob zerkleinerten Polymerpartikeln 39.1 gelangen unmittelbar in den zweiten Zerkleinerer. Grundsätzlich können die bereits grob zerkleinerten getrockneten Polymerpartikel 39.1 dazu gefördert werden, etwa pneumatisch oder mechanisch. Es hat sich jedoch als besonders vorteilhaft und gut für eine kompakte Bauweise erwiesen, wenn der zweite Zerkleinerer bezüglich des Ortes unterhalb des ersten Zerkleineres platziert ist. Der zweite Zerkleinerer ist zudem in Produktstromrichtung, ggf. unter Zwischenschaltung einer dritten Zerkleinerung, vor der pneumatischen Förderung angeordnet. Damit ist eine regelmäßig sich nach der pneumatischen Förderung befindende Mahlung ausreichend gewährleistet, dass dieser ein ausreichend fein zerkleinerter und vergleichmäßigter Produktstrom von getrockneten Polymerpartikeln selbst bei veränderlichen Eigenschaften des getrockneten Polymerstranges eines Trockenkuchens 35 und demzufolge den groben Brocken 37 hinter einem Bandtrockner 36 und vor der Zerkleinerungsanordnung 38 zugeführt wird. Die örtliche Platzierung des zweiten Zerkleinerers unmittelbar unterhalb des ersten Zerkleinerers nutzt vorteilhaftweise die Schwerkraft, so dass die grob zerkleinerten Polymerpartikel 39.1 direkt in den zweiten Zerkleinerer 38.2 fallen können.

Insofern stellt die Ausführungsform der FIG.2E eine Abwandlung von diesem Prinzip dar, da die Förderschnecke FS den Produktstrom 39.1 von Polymerpartikeln aufnimmt und seitlich versetzt in der Weise, dass der zweite Zerkleinerer 38.2 örtlich neben dem ersten Zerkleinerer 38.1 zur Aufnahme von vorzerkleinerten getrockneten Polymerpartikeln platziert ist.

Darüber hinaus hat es sich auch als vorteilhaft erwiesen, einen in der Zerkleinerungsanordnung 38 ggf. einzusetzenden Brecher, insbesondere einen Brecher als ersten Zerkleinerer besonders vorteilhaft zu dimensionieren. Es zeigt sich, dass die Rolle eines Brechers, beispielsweise eines Kreuzflügelzerkleinerers, als erster Zerkleinerer 38.1 der Zerkleinerungsanordnung 38 besonders kritisch ist, denn auf diesen gelangen als erstes die groben Brocken 37 des getrockneten Polymerstrangs 35. Der Kreuzflügelzerkleinerer oder sonstige Brecher des ersten Zerkleinerers 38.1 sollte also hinsichtlich seiner Größe und Abstände zwischen den Funktions- und Brechstäben an der rotierenden Walze bzw. dem feststehenden Gitterrost so dimensioniert sein, dass möglichst auch sehr große grobe Brocken 37 von diesem zerkleinert werden und nicht darauf liegenbleiben. Andererseits sollten die Abstände so gering sein, dass eine Zerkleinerung der groben Brocken zu jedenfalls grob zerkleinerten getrockneten Polymerpartikeln 39.1 bereits ausreichend ist, um diese auf einer Hammermühle oder sonstige Mühle oder einem Walzenbrecher oder gar in eine Förderschnecke geben zu können. Andererseits sollten die Abstände bei einem Brecher nicht zu gering sein, um die mechanischen Krafteinwirkungen auf Funktionsstäbe oder sonstige Funktionswerkzeuge an einer Welle bzw. die Welle oder einen Wellenantrieb desselben nicht zu groß werden zu lassen.

Dazu zeigt FIG.3A und FIG.3B schematisch eine Welle 10 mit daran angeordneten und sich mit dieser drehenden Funktionswerkzeugen 14 in Form von Funktionsstäben oder Barren gegenüber feststehenden Stäben oder Barren 16 eines Gitterrostes.

Die mit der Welle drehenden Funktionsstäbe 14 stehen senkrecht von der Welle 10 ab und haben eine Länge LF von 100 bis 300 mm, bevorzugt 100 bis 200 mm, insbesondere 100 bis 150 mm. Die feststehenden Gitterstäbe des Gitterrostes haben eine Stärke DB (mit dem in Fig. 5B gezeigten Dach D) von 8 bis 20 mm, bevorzugt 9 bis 15 mm, insbesondere 10 bis 12 mm sowie eine Höhe on 40 bis 100 mm, bevorzugt 50 bis 90 mm, insbesondere zwischen 50 und 70 mm.

Der lichte Abstand Δ --hierzwischen 8 bis 20 mm, bevorzugt 9 bis 15 mm, insbesondere 10 bis 12 mm-- zwischen den Funktionsstäben 14 und Barren 16 liegt vorteilhaft unterhalb der zweifachen Dicke DF der Funktionsstäbe 14 bzw. der Dicke DB der Barren 16. Vorliegend ist der lichte Abstand Δ in etwa im Bereich der Dicke DF der Funktionsstäbe 14. Der lichte Abstand a zwischen den Barren 16 ist typischerweise kleiner als das fünf-fache der Dicke DF der Funktionsstäbe 14 bzw. der Dicke DB der Barren 16. Der lichte Abstand DS zwischen den Funktionsstäben 14 wird durchgriffen von den feststehenden Barren 16 bzw. Gitterstäben des Stabgitters. Betreffend die Längen der Funktionsstäbe 14 bzw. der Barren 16 so liegt für einen Kreuzflügelzerkleinerer LB in etwa im Bereich von LF und für eine Fräse wird LB sehr viel kleiner als LF sein.

Die Welle 10 in FIG.3B trägt die Funktionsstäbe 14 in einer spiralförmigen Anordnung, wobei die Steigung der Spirale etwa zwischen 20° und 70°, bevorzugt bei etwa 45° liegt und die Anzahl der Funktionsstäbe für eine umfängliche Anordnung bei 6 bis 10, bevorzugt 7 bis 9, hier vorliegend 8 beträgt.

FIG.4A zeigt in einer Querschnittsansicht entlang der Achse eines Kreuzflügelzerkleinerers, insbesondere für die Anordnung als erster Zerkleinerer 38.1 der Zerkleinerungsanordnung 38, unterschiedliche Ausführungen eines Gitters von Stäben oder Barren, die als Brechstäbe feststehend sind.

Bei der Ausführungsform der Ansicht A1 der FIG.4A ist aufgrund des durchgehenden Gitters und beidseitig befestigten Brechstäben 16 eine höhere Stabilität für die Brechstäbe 16 gegeben. Gemäß der in Ansicht A1 gezeigten Seiten- und Draufansicht der FIG.4A kann ein Gitter von Brechstäben geradlinig verlaufen und durchgehend ausgeführt sein. Dazu kann das Gitter von Brechstäben 16 unterhalb der Welle 10 angeordnet sein.

Es kann das Gitter von Brechstäben 16 auch auf Höhe der Achse der Welle 10 angeordnet sein und, wie in FIG.4B gezeigt, jeweils einseitig angeordnete Brechstäbe 16 auf beiden Seiten der Welle aufweisen, die kurz vor dem Wellenkörper 10 mit einem verbleibenden Spalt s, d.h. hier in einem Abstand, enden.

Wie in Ansicht A2 der FIG.4A gezeigt, kann das Gitter auch außerhalb des Wellenkörpers auf Achshöhe des Wellenkörpers 10 angeordnet sein und den Wellenkörper 10 umfänglich und unterhalb dessen umgeben; nämlich wie Ansicht A2 der FIG.4A zeigt, etwa auf einem Umfangsradius, der in etwa dem Umfangsradius der Mitten bis Enden der Funktionsstäbe 14 entspricht. Dies führt vorteilhaft dazu, dass die Funktionsstäbe 14 entlang ihrer gesamten umfänglichen Drehbewegungen mit maximalem Hebelarm auf grobe Brocken 37 des getrockneten Polymerstranges des Trockenkuchens 35 schlagen können, während diese von dem Gitter 16 gehalten werden.

Dies gilt nur bedingt für die jeweils einseitig befestigten und zweiteilig ausgeführten Gitter mit den Brechstäben 16 der Ausführungsform der FIG.4B - zudem führt der Spalt s zwischen Wellenkörper 10 und dem Ende der Brechstäbe 16 dazu, dass ggf. noch nicht zerkleinerte sehr grobe Brocken 37 in den Spalt s gelangen und dort verklemmen oder unzureichend zerkleinerte grobe Brocken hindurchfallen.

Dies ist zwar bei der Ausführungsform A1 der FIG.4A aufgrund des durchgehenden Gitters und beidseitig befestigten Brechstäben 16 vermieden - allerdings üben die Funktionsstäbe 14 an der Welle C beim Auftreffen auf die Brocken 37 ggf. nicht die maximale Brechwirkung aus, da der Schlagwinkel irgendwo zwischen 180° und 90° liegt; hier ist also der Hebelarm der Funktionsstäbe 14 nicht optimal ausgenutzt. Gleichwohl erweisen sich alle drei Ausführungsformen als vergleichsweise bevorzugt zur Optimierung bereits eines Kreuzflügelzerkleinerers oder sonstigen Brechers anstelle des ersten Zerkleinerers 38.1 der Zerkleinerungsanordnung 38.

Ansicht A4 der FIG.4A zeigt einen Kassettentyp eines Gitters von Brechstäben 16 in einem Rahmen R mit einer vorteilhaften Geometrie G an der Oberseite der Brechstäbe 16 oder Barren.

FIG.5A zeigt zur weiteren Verfestigung einer Anbringung von Funktionsstäben 14 an einer Welle 10. Gemäß der Ausführung der Ansicht A1 können die Funktionsstäbe 14 an der Welle 10 zur Bildung einer Aufnahme 12 angeschweißt sein. Die bevorzugte Ausführung von Hülsen, Stutzen, Muffen oder sonstigen Aufnahmen 12 der Funktionsstäbe 14 zeigt Ansicht A2 der FIG.5A auf. Die Funktionsstäbe 14 können in dieser Aufnahme 12 beispielsweise verschweißt werden. Eine Aufnahme 12 für einen Funktionsstab 14 kann gemäß Ansicht A3 der FIG.5A beispielsweise auch dadurch gebildet sein, dass ein Funktionsstab 14 durch einen Durchlass entlang eines Durchmessers durch die Welle 10 hindurch geschoben ist und in dieser so gebildeten Aufnahme 12 beispielsweise verschweißt ist.

FIG.5B zeigt in Ansicht B1 und B2 für ein Gitter der Ansicht A4 der FIG.4A, d.h. für einen Kassettentyp eines Gitters von Brechstäben 16 vorteilhafte Ausführungen einer Geometrie G an der Oberseite der Brechstäbe 16 oder Barren. Die bereits stegförmig und damit vergleichsweise stabil ausgeführten Stäbe oder Barren 16 haben eine geradförmig verlaufende spitze Kante, die bevorzugt etwa mittig zur Achse der Oberseite des ansonsten vorzugsweise quaderförmigen Brechstabkörpers verläuft. Die Spitze weist einen Dachwinkel von 60° bis 90° Grad auf. Der Dachwinkel von 60° bis 90° kann grundsätzlich am Scheitelpunkt spitz oder abgerundet ausgeführt werden. In beiden Fälle ergibt sich eine höhere Druckkraft auf einen Brocken 37, da die Auflagefläche auf einem solchen Barren oder Stab 16 vergleichsweise gering ist. Je spitzer der Winkel ist, und je spitzer der Gradwinkel ist, desto höher wird die Brechwirkung des Stabs 16 sein. Grundsätzlich kann der Stab 16 massiv mit dem Grad ausgeführt werden oder als Quaderkörper mit ausgesetztem Hohldach, wie in Ansicht B2 der FIG.5B gezeigt.

FIG.6A zeigt mit dem Detail der FIG.6B eine besonders bevorzugte Ausführung einer Welle 10 mit Funktionsstäben oder Barren entlang der Achse der Welle 10, deren Gesamtzahl von der Breite der Welle bzw. der Breite des Bandtrocknerbandes abhängt. Vorliegend sind pro Umfangsverlauf eine Anzahl von vorzugsweise zwischen 5 bis 15 Funktionsstäben vorgesehen. Ansicht A der FIG.6A zeigt die gesamte Welle 10 und Ansicht B einen vergrößerten Ausschnitt an einem der Welle 10. FIG.6B zeigt das Detail eines Funktionsstabs 14 mit einstückig gebildeten Ringkörper 14.2. Der Funktionsstab 14 besteht aus einem einstückig, als ein Teil gebildeter Ringkörper mit daran anschließenden Barrenkörper 14.1. Der so gebildete Stabkörper 14 kann mit seinem Ring 14.2 auf die Welle 10 geschoben, winkelrichtig am Ort der Spirale ausgerichtet werden und derart fixiert oder formschlüssig verbunden werden, dass sich jene Spirallinie --wie in FIG.6A gezeigt-- ausbildet. Der Ringkörper 14.2 an der Welle 10 führt im Unterschied zur Befestigung der FIG.5A zu einer noch größeren Stärke und Krafteinbringung in die Welle 10 so dass insgesamt die Lebenszeit des Schlagarms 14.1 verlängert ist. Grundsätzlich kann ein solcher in FIG.6B gezeigter Funktionsstab auch bei höherer Umdrehungsgeschwindigkeit einer Welle 10 genutzt werden. Eine Welle kann grundsätzlich 2 bis 6 m Länge entlang ihrer Achse aufweisen. Selbst bei dieser Länge erweist sich ein Kreuzflügelzerkleinerer mit weiter oben genannten Spaltmaßen zwischen Funktionsstäben und Brechstäben als vorteilhaft.

Fig. 7A zeigt eine kumulierte Auftragung von Massenanteilen der Siebfraktionen zur graphischen Bestimmung des Massenmittel Teilchendurchmessers nach Zerkleinerung. Das Ergebnis der Messung ist in der folgenden Tabelle Tab.1 mit den Siebgrößen aufgetragen; die Werte sind in Fig.7A wiedergegeben. Der Massenmittel Teilchendurchmesser am Produktstrom 41 nach Zerkleinerung liegt bei etwa 3.7mm, was aus der Auftragung und Zuordnung eines Massenmittel Teilchendurchmessers von Partikeln für einen 50Gew.%-Wert in der Fig.7A erkennbar ist. Der Massenmittel Teilchendurchmesser nach Zerkleinerung wird nach EDANA Testmethode Nr. WSP 220.2-05 "Partikel Size Distribution" ermittelt. Für die Partikelgrößenverteilungsbestimmung am Produktstrom 41 nach Zerkleinerung werden allerdings Siebe mit den Maschenweiten 0.6 / 1 / 2 / 3.15 / 4 / 5 / 6.3 / 8 /10 /14 / 20 mm verwendet (s.u. Fraktion). Der Massenmittel Teilchendurchmesser ist hierbei der Wert der "Maschenweite", der sich für die in Fig.7A eingezeichneten kumulierten 50 Gew.-% ergibt.

**Tab.1**

| **Fraktionsgröße** | ***SAP Gem.Gew.(%)*** | **Fraktion** | **SAP Kum.Gew.(%)** |
|---|---|---|---|
| 0-600µm | *3,3* | 0,6mm | 3,3 |
| 600µm-1mm | *3,8* | 1mm | 7,1 |
| 1mm-2mm | *15,9* | 2mm | 23,0 |
| 2mm-3,15mm | *20,5* | 3,15mm | 43,5 |
| 3,15mm-4mm | *10,8* | 4mm | 54,4 |
| 4mm-5mm | *10,7* | 5mm | 65,1 |
| 5mm-6,3mm | *9,1* | 6,3mm | 74,1 |
| 6,3mm-8mm | *9,7* | 8mm | 83,8 |
| 8mm-10mm | *5,9* | 10mm | 89,7 |
| 10mm-14mm | *7,0* | 14mm | 96,7 |
| 14mm-20mm | *3,3* | 20mm | 100,0 |
| >20mm | *0,0* | | 100,0 |

Der Massenmittel Teilchendurchmesser nach Mahlung und Siebung wird am Produktstrom 47analog dem Massenmittel Teilchendurchmesser nach Zerkleinerung bestimmt und ist in Fig.7B gezeigt. Für die Partikelgrößenverteilungsbestimmung einer Verteilung werden allerdings Siebe mit den Maschenweiten 45 /150 / 212 / 300 / 425 / 500 / 600 / 710 / 850 µm verwendet (s.u. Fraktion). Es wurde eine Partikelgrößenverteilungsbestimmung nach Mahlung und Siebung am Produktstrom 47 an Produkten durchgeführt, die zwischen 150 und 850µm, zwischen 100 und 700µm und zwischen 100 und 600µm abgesiebt wurden.

Das jeweilige Ergebnis der Messung ist in den folgenden Tabellen mit den Siebgrößen aufgetragen; die Werte sind in Fig.7B wiedergegeben. Es ergibt sich ein Massenmittel Teilchendurchmesser nach Mahlung und Absiebung bei 150 und 850µm Produktabsiebung von 570µm (Tab.2A), bei 100 und 700µm Produktabsiebung von 425µm (Tab.2B), und bei 100 und 600µm Produktabsiebung von 348µm (Tab.2C).

**Tab.2A**

| **Produktabsiebu ng** | | | |
|---|---|---|---|
| **150 und 850 µm:** | | | |
| **Fraktionsgröße** | ***SAP* (%) *grob*** | **Fraktion** | **grobKum Gew.%** |
| 0-45µm | 0,1 | 45µm | 0,1 |
| 45µm-150µm | 1,6 | 150µm | 1,7 |
| 150µm-212µm | *4,0* | 212µm | 5,7 |
| 212µm-300µm | 7,6 | 300µm | 13,3 |
| 300µm-425µm | 14,1 | 425µm | 27,4 |
| 425µm-500µm | *11,0* | 500µm | 38,4 |
| 500µm-600µm | *16,9* | 600µm | 55,3 |
| 600µm-710µm | 26,9 | 710µm | 82,2 |
| 710µm-850µm | *17,7* | 850µm | 99,9 |
| >850µm | 0,1 | | 100,0 |

**Tab.2B**

| **Produktabsiebung** | | | |
|---|---|---|---|
| **100 und 700 µm:** | | | |
| **Fraktionsgröße** | ***SAP(%)*** | **Fraktion** | **mittelKum Gew.%** |
| 0-45µm | 0,0 | 45µm | 0,0 |
| 45µm-150µm | 5,5 | 150µm | 5,5 |
| 150µm-212µm | 7,2 | 212µm | 12,7 |
| 212µm-300µm | 12,6 | 300µm | 25,3 |
| 300µm-425µm | 25,1 | 425µm | 50,4 |
| 425µm-500µm | *18,8* | 500µm | 69,2 |
| 500µm-600µm | *20,0* | 600µm | 89,2 |
| 600µm-710µm | 9,6 | 710µm | 98,8 |
| 710µm-850µm | 1,2 | 850µm | 100,0 |
| >850µm | 0,0 | | 100,0 |

**Tab.2C**

| **Produktabsiebu ng** | | | |
|---|---|---|---|
| **100 und 600 µm:** | | | |
| **Fraktionsgröße** | ***SAP(%)*** | **Fraktion** | **fein Ku m Gew.%** |
| 0-45µm | 0,0 | 45µm | 0,0 |
| 45µm-150µm | 2,8 | 150µm | 2,8 |
| 150µm-212µm | 11,4 | 212µm | 14,2 |
| 212µm-300µm | 21,5 | 300µm | 35,7 |
| 300µm-425µm | *38,0* | 425µm | 73,7 |
| 425µm-500µm | 16,2 | 500µm | 89,9 |
| 500µm-600µm | 8,6 | 600µm | 98,5 |
| 600µm-710µm | 1,4 | 710µm | 99,9 |
| 710µm-850µm | 0,1 | 850µm | 100,0 |
| >850µm | 0,0 | | 100,0 |

### Bezugszeichenliste:

- 10: Welle
- 14: Funktionsstab
- 16: Barren
- 14.1: Funktionsstabkörper
- 14.2: Ringkörper
- 31: Edukte
- 30: Reaktor
- 32: Pufferbehälter/Gelbunker
- 33: Klumpen mit gelartiger Konsistenz
- 34: Fördermittel
- 35: Trockenkuchen
- 36: Bandtrockner
- 37: Bruchstücke des Trockenkuchens oder sonstige grobe Brocken
- 38: Zerkleinerungsanordnung
- 38.1, 38.2: erster Zerkleinerer, zweiter Zerkleinerer
- 39, 39.1, 39.2: getrocknete Polymerpartikel, grob zerkleinerte Brocken, feinere Brocken
- 40: Förder-/Vergleichmäßigungs-Mittel, optional dritter Zerkleinerer
- 41: vergleichmäßigte getrocknete Polymerpartikel des Hauptstroms
- 42: pneumatische Förderung
- 43: getrockneten Polymerpartikel in pneumatischer Förderung
- 44: Mahlung
- 45: gemahlene, getrocknete Polymerpartikel
- 46: Siebvorrichtung
- 47: gesiebte, gemahlene und getrocknete Polymerpartikel
- U: Umlenkmittel
- ZF: Zerkleinerungsfräse
- SF: Schneidfräse
- KFZ: Kreuzflügelzerkleinerer
- WB: Walzenbrecher
- FS: Förderschnecke

## Patentansprüche

1. Bandtrockneranordnung zum Trocknen eines wässrigen Polymergels und zum Zerkleinern des getrockneten Polymergels zu getrockneten Polymerpartikeln, aufweisend:
- einen Trockneraufbau (36) zum Trocknen eines wässrigen Polymergels,
- eine Zerkleinerungsanordnung (38) in Produktstromrichtung nach dem Trockneraufbau (36) zum Zerkleinern des getrockneten Polymergels zu getrockneten Polymerpartikeln,
- eine Mahlung (44) zum Mahlen von zerkleinerten getrockneten Polymerpartikeln aus der Zerkleinerungsanordnung,
- eine pneumatische Förderung (42) wobei
- die Zerkleinerungsanordnung (38) in Produktstromrichtung unmittelbar nach dem Trockneraufbau angeordnet oder an dem Trockneraufbau (36) angebracht ist, und
- die Zerkleinerungsanordnung (38) wenigstens einen ersten Zerkleinerer (38.1) und einen zweiten Zerkleinerer mit jeweils einer rotierbaren Welle mit Funktionswerkzeugen aufweist, wobei der zweite Zerkleinerer (38.2) in Produktstromrichtung nach dem ersten Zerkleinerer (38.1) angeordnet ist, wobei
der erste Zerkleinerer (38.1) örtlich unmittelbar, nach dem Trockneraufbau zum Zerkleinern des getrockneten Polymergels zu getrockneten Polymerpartikeln platziert ist, und
der erste Zerkleinerer (38.1) als eine Zerkleinerungsfräse (ZF), oder
der erste Zerkleinerer (38.1) als ein Kreuzflügelzerkleinerer (KFZ) ausgebildet ist, und wobei der zweite Zerkleinerer, zur Aufnahme von frei fallenden vorzerkleinerten getrockneten Polymerpartikeln aus dem ersten Zerkleinerer, örtlich unmittelbar unterhalb des ersten Zerkleinerers platziert ist, wobei
- die Zerkleinerungsanordnung, nämlich der zweite Zerkleinerer (38.2) zur Zerkleinerung der vorzerkleinerten getrockneten Polymerpartikeln zu feinzerkleinerten getrockneten Polymerpartikeln mit einem Massenmittel Teilchendurchmesser zwischen 1 mm und 9 mm ausgebildet ist, und
- die Zerkleinerungsanordnung (38) in Produktstromrichtung vor der pneumatischen Förderung (43) und vor die Mahlung (44) angeordnet ist, wobei sich die pneumatische Förderung zwischen der Zerkleinerungsanordnung und der Mahlung befindet, und
- die Mahlung zum Mahlen von zerkleinerten getrockneten Polymerpartikeln aus der Zerkleinerungsanordnung (38) zu getrockneten, zerkleinerten und gemahlenen Polymerpartikeln mit einem Massenmittel Teilchendurchmesser von 250 µm bis 700 µm ausgebildet ist.

2. Bandtrockneranordnung nach Anspruch 1, **dadurch gekennzeichnet, dass**
- der zweite Zerkleinerer (38.2) unterhalb des ersten Zerkleinerers, ohne eine Förderschnecke (FS), zur Aufnahme von vorzerkleinerten getrockneten Polymerpartikeln platziert ist.

3. Bandtrockneranordnung nach Anspruch 1 oder 2, **dadurch gekennzeichnet, dass**
- der zweite Zerkleinerer (38.2) zur Zerkleinerung der vorzerkleinerten getrockneten Polymerpartikeln zu feinzerkleinerten getrockneten Polymerpartikeln ausgebildet ist, mit einem Massenmittel Teilchendurchmesser zwischen 1 mm und 5 mm, und/oder
- die Zerkleinerungsanordnung (38) für eine Verweilzeit von Polymerpartikeln unterhalb von 90sec. in der Zerkleinerungsanordnung ausgebildet ist.

4. Bandtrockneranordnung nach einem der Ansprüche 1 bis 3, **dadurch gekennzeichnet, dass**
- die Zerkleinerungsanordnung (38) ein Umlenkmittel umfasst, wobei der erste Zerkleinerer (38.1) der Zerkleinerungsanordnung (38) in Produktstromrichtung nach dem Umlenkmittel (U) angeordnet ist und/oder
- der erste Zerkleinerer (38.1) örtlich zur Aufnahme von Bruch eines getrockneten Polymerstrangs von getrockneten Polymerpartikeln relativ zu dem Umlenkmittel platziert ist, wobei das Umlenkmittel relativ zum ersten Zerkleinerer (38.1) derart ausgerichtet ist, dass der Bruch eines getrockneten Polymerstrangs in den ersten Zerkleinerer (38.1) fällt, insbesondere wobei der erste Zerkleinerer örtlich unterhalb des Umlenkmittels (U) platziert ist.

5. Bandtrockneranordnung nach einem der Ansprüche 1 bis 4, **dadurch gekennzeichnet, dass**
- der erste Zerkleinerer (38.1) als die Zerkleinerungsfräse (ZF) mit einem Stütztisch ausgebildet ist

6. Bandtrockneranordnung nach einem der Ansprüche 1 bis 5, **dadurch gekennzeichnet, dass**
- der zweite Zerkleinerer (38.2) als ein Kreuzflügelzerkleinerer (KFZ) ausgebildet ist, oder
- der zweite Zerkleinerer oder ein dritter Zerkleinerer als Walzenbrecher (WB) oder eine Förderschnecke (FS) ausgebildet ist.

7. Bandtrockneranordnung nach einem der Ansprüche 1 bis 6, **dadurch gekennzeichnet, dass** die Zerkleinerungsanordnung (38) als den zweiten Zerkleinerer (38.2) oder einen dritten Zerkleinerer eine Förderschnecke umfasst, wobei ein Zerkleinerer der Zerkleinerungsanordnung, insbesondere der erste Zerkleinerer oder der zweite Zerkleinerer, in Produktstromrichtung unmittelbar vor der Förderschnecke (FS) angeordnet ist.

8. Bandtrockneranordnung nach Anspruch 7, **dadurch gekennzeichnet, dass**
- die Förderschnecke (FS) unterhalb eines Zerkleinerers zur Aufnahme von frei fallenden getrockneten Polymerpartikeln aus dem Zerkleinerer angeordnet ist.

9. Bandtrockneranordnung nach einem der Ansprüche 1 bis 8, **dadurch gekennzeichnet, dass**
- der Kreuzflügelzerkleinerer (KFZ) eine rotierbare Welle mit Funktionsstäben und einen unmittelbar gegenüber der Welle angeordneten feststehenden Stabrost aufweist, wobei die rotierbaren Funktionsstäbe in Zwischenräume zwischen feststehende Brechstäbe des Stabrostes greifen, um den Trockenkuchen von getrocknetem Polymergel zu zerkleinern, wobei
- die Brechstäbe (16) einen Axialabstand (a) von nicht mehr als das fünf-fache, insbesondere nicht mehr als das vier-fache oder drei-fache einer Stärke (DF) der Funktionsstäbe (14) aufweisen,
und/oder
- die Funktionsstäbe (14) und/oder Brechstäbe (16) eine Länge (LF, LB) von nicht mehr als dem zweifachen, insbesondere von nicht mehr als dem einfachen Durchmesser der Welle (10) aufweisen.

10. Bandtrockneranordnung nach Anspruch 9, **dadurch gekennzeichnet, dass** ein axialer Spalt (Δ) zwischen einem Funktionsstab (14) und einem Brechstab (16) geringer ist als das Zweifache der axialen Breite (2*DF) des Funktionsstabs (14) und/oder geringer ist als das Zweifache der axialen Breite (2*DB) des Brechstabs (16) ist und/oder der axiale Spalt (Δ) geringer ist als 20mm, bevorzugt geringer ist als 15mm, insbesondere der axiale Spalt zwischen 8mm bis 12mm beträgt.

11. Bandtrockneranordnung nach einem der Ansprüche 1 bis 10, **dadurch gekennzeichnet, dass**
- ein Zerkleinerer der Zerkleinerungsanordnung (38) zum Rotieren der rotierbaren Welle mit einer Umdrehungsgeschwindigkeit von mehr als 50U/min und weniger als 250U/min ausgebildet ist.

12. Bandtrockneranordnung nach einem Ansprüche 1 bis 11, **dadurch gekennzeichnet, dass** die Zerkleinerungsfräse (ZF) die rotierbare Welle (10) mit wenigstens einem Funktionsstab (14) aufweist, und zum Abfräsen von getrockneten Polymerpartikeln direkt von einem Trockenkuchen ausgebildet ist, und/oder die Zerkleinerungsfräse die rotierbare Welle mit einer Anzahl von Funktionswerkzeugen aufweist, die entlang einem einer Spirale folgenden Arbeitsrand angeordnet ist, insbesondere wobei die Spirale einen Gangwinkel zwischen 20° bis 70° aufweist.

13. Bandtrockneranordnung nach einem der Ansprüche 1 bis 12, **dadurch gekennzeichnet, dass**
- der erste Zerkleinerer (38.1) einen oberen Arbeitsrand hat, der im Falle des Kreuzflügelzerkleinerers (KFZ) auf Höhe oder unterhalb der Höhe einer Aufnahmefläche des Förderbandes zur Aufnahme eines Abwurfes des Trockenkuchens angeordnet ist, oder
- der erste Zerkleinerer (38.1) im Falle der Zerkleinerungsfräse (ZF) einen Arbeitsrand auf Höhe oder oberhalb der Höhe einer Aufnahmefläche des Förderbandes zur fräsenden Bearbeitung des Trockenkuchens und Unterstützung des Abwurfes des Trockenkuchens nach unten angeordnet ist.

14. Bandtrockneranordnung nach einem der Ansprüche 1 bis 13, **dadurch gekennzeichnet, dass** die Mahlung zum Mahlen von zerkleinerten getrockneten Polymerpartikeln aus der Zerkleinerungsanordnung (38) zu getrockneten, zerkleinerten und gemahlenen Polymerpartikeln ausgebildet ist, mit einem Massenmittel Teilchendurchmesser von 300 µm bis 600 µm.

15. Verfahren zum Trocknen eines wässrigen Polymergels und zum Zerkleinern des getrockneten Polymergels zu getrockneten Polymerpartikeln mit einer Bandtrockneranordnung nach einem der Ansprüche 1 bis 14.

## Claims

1. A belt dryer arrangement for drying an aqueous polymer gel and for comminuting the dried polymer gel to give dried polymer particles, comprising:
- a dryer setup (36) for drying an aqueous polymer gel,
- a comminuting arrangement (38) downstream of the dryer setup (36) relative to the product flow direction, for comminuting the dried polymer gel to give dried polymer particles,
- a grinding facility (44) for grinding comminuted dried polymer particles from the comminuting arrangement,
- a pneumatic conveying facility (42) where
- the comminuting arrangement (38) is disposed immediately downstream of the dryer setup relative to the product flow direction or is mounted on the dryer setup (36), and
- the comminuting arrangement (38) comprises at least a first comminutor (38.1) and a second comminutor, each having a rotatable shaft with functional tools, the second comminutor (38.2) being disposed downstream of the first comminutor (38.1) relative to the product flow direction, where
- the first comminutor (38.1) is located immediately after the dryer setup for comminuting the dried polymer gel to give dried polymer particles, and
the first comminutor (38.1) is configured as a crusher (ZF), or
the first comminutor (38.1) is configured as a cross-vane comminutor (KFZ), and where the second comminutor for receiving free-falling precomminuted dried polymer particles from the first comminutor is located immediately below the first comminutor, where
- the comminuting arrangement, specifically the second comminutor (38.2), is configured for comminuting the precomminuted dried polymer particles to give finely comminuted dried polymer particles having a mass-average particle diameter of between 1 mm and 9 mm, and
- the comminuting arrangement (38) is disposed upstream of the pneumatic conveying facility (43) and upstream of the grinding facility (44) relative to the product flow direction, where the pneumatic conveying facility is located between the comminuting arrangement and the grinding facility, and
- the grinding facility is configured for grinding comminuted dried polymer particles from the comminuting arrangement (38) to give dried, comminuted and ground polymer particles having a mass-average particle diameter of 250 um to 700 µm.

2. The belt dryer arrangement according to claim 1, wherein
- the second comminutor (38.2) is located below the first comminutor, without a conveying screw (FS), for receiving precomminuted dried polymer particles.

3. The belt dryer arrangement according to claim 1 or 2, wherein
- the second comminutor (38.2) is configured for comminuting the precomminuted dried polymer particles to give finely comminuted dried polymer particles, with a mass-average particle diameter of between 1 mm and 5 mm, and/or
- the comminuting arrangement (38) is configured for a polymer particle residence time of below 90 sec in the comminuting arrangement.

4. The belt dryer arrangement according to any of claims 1 to 3, wherein
- the comminuting arrangement (38) comprises a deflecting means, the first comminutor (38.1) of the comminuting arrangement (38) being disposed downstream of the deflecting means (U) relative to the product flow direction,
and/or
- the first comminutor (38.1) is located for receiving crushed material of a dried polymer strand of dried polymer particles relative to the deflecting means, the deflecting means being oriented relative to the first comminutor (38.1) in such a way that the crushed material of a dried polymer strand falls into the first comminutor (38.1), more particularly where the first comminutor is located below the deflecting means (U).

5. The belt dryer arrangement according to any of claims 1 to 4, wherein
- the first comminutor (38.1) is configured as the crusher (ZF) with a support table.

6. The belt dryer arrangement according to any of claims 1 to 5, wherein
- the second comminutor (38.2) is configured as a cross-vane comminutor (KFZ), or
- the second comminutor or a third comminutor is configured as a roll crusher (WB) or a conveying screw (FS) .

7. The belt dryer assembly according to any of claims 1 to 6, wherein the comminuting arrangement (38) comprises, as the second comminutor (38.2) or a third comminutor, a conveying screw, with one comminutor of the comminuting arrangement, more particularly the first comminutor or the second comminutor, being disposed immediately upstream of the conveying screw (FS) relative to the product flow direction.

8. The belt dryer arrangement according to claim 7, wherein
- the conveying screw (FS) is disposed below a comminutor for receiving free-falling dried polymer particles from the comminutor.

9. The belt dryer arrangement according to any of claims 1 to 8, wherein
- the cross-vane comminutor (KFZ) comprises a rotatable shaft having functional rods, and a stationary rod grid disposed directly opposite the shaft, the rotatable functional rods engaging into interstices between stationary crushing rods of the rod grid, in order to comminute the dry cake of dried polymer gel, where
- the crushing rods (16) have an axial spacing (a) of not more than five times, more particularly not more than four times or three times a thickness (DF) of the functional rods (14),
and/or
- the functional rods (14) and/or crushing rods (16) have a length (LF, LB) of not more than two times, more particularly not more than once the diameter of the shaft (10) .

10. The belt dryer arrangement according to claim 9, **characterized in that** that an axial gap (Δ) between a functional rod (14) and a crushing rod (16) is lower than two times the axial width (2*DF) of the functional rod (14) and/or lower than two times the axial width (2*DB) of the crushing rod (16) and/or the axial gap (Δ) is less than 20 mm; preferably less than 15 mm, more particularly the axial gap being between 8 mm to 12 mm.

11. The belt dryer arrangement according to any of claims 1 to 10, wherein
- one comminutor of the comminuting arrangement (38) is configured for rotating the rotatable shaft with a rotational velocity of more than 50 rpm and less than 250 rpm.

12. The belt dryer arrangement according to any of claims 1 to 11, wherein the crusher (ZF) comprises the rotatable shaft (10) having at least one functional rod (14), and is configured for milling off dried polymer particles directly from a dry cake, and/or the crusher comprises the rotatable shaft having a number of functional tools which are arranged along a working edge which follows a spiral, the spiral more particularly having a helix angle of between 20° to 70°.

13. The belt dryer arrangement according to any of claims 1 to 12, wherein
- the first comminutor (38.1) has an upper working edge, which in the case of the cross-vane comminutor (KFZ) is disposed at the level or below the level of a receiving surface of the conveying belt for receiving an ejection of the dry cake,
or
- the first comminutor (38.1) in the case of the crusher (ZF) a working edge is disposed at the level or above the level of a receiving surface of the conveying belt, for milling the dry cake and supporting the downward ejection of the dry cake.

14. The belt dryer arrangement according to any of claims 1 to 13, wherein
- the grinding facility is configured for grinding comminuted dried polymer particles from the comminuting arrangement (38) to give dried, comminuted and ground polymer particles, having a mass-average particle diameter of 300 um to 600 µm.

15. A process for drying an aqueous polymer gel and for comminuting the dried polymer gel to give dried polymer particles with a belt dryer arrangement according to any of claims 1 to 14.

## Revendications

1. Agencement de séchoir à bande pour sécher un gel polymère aqueux et pour broyer le gel polymère séché en particules polymères séchées, présentant :
- un ensemble de séchoir (36) pour sécher un gel polymère aqueux,
- un agencement de broyage (38) dans la direction d'écoulement du produit après de l'ensemble de séchoir (36) pour broyer le gel polymère séché en particules polymères séchées,
- un meulage (44) pour meuler les particules polymères séchées broyées provenant de l'agencement de broyage,
- un transport pneumatique (42),
- l'agencement de broyage (38) étant agencé immédiatement après l'ensemble de séchoir dans la direction d'écoulement du produit ou étant disposé sur l'ensemble de séchoir (36), et
- l'agencement de broyage (38) présentant au moins un premier broyeur (38.1) et un deuxième broyeur avec respectivement un arbre rotatif avec des outils fonctionnels, le deuxième broyeur (38.2) étant agencé dans la direction d'écoulement du produit après le premier broyeur (38.1),
- le premier broyeur (38.1) étant placé localement immédiatement après la structure de séchoir pour broyer le gel polymère séché en particules polymères séchées, et
le premier broyeur (38.1) étant configuré sous la forme d'une fraise de broyage (ZF), ou
le premier broyeur (38.1) étant configuré sous la forme d'un broyeur à ailes croisées (KFZ), et le deuxième broyeur, pour recevoir des particules polymères séchées pré-broyées tombant librement du premier broyeur, étant placé localement immédiatement en dessous du premier broyeur,
- l'agencement de broyage, à savoir le deuxième broyeur (38.2), étant configuré pour broyer les particules polymères séchées pré-broyées en particules polymères séchées finement broyées ayant un diamètre de particule moyen en masse compris entre 1 mm et 9 mm, et
- l'agencement de broyage (38) étant agencé dans la direction d'écoulement du produit avant le transport pneumatique (43) et avant le meulage (44), le transport pneumatique se trouvant entre l'agencement de broyage et le meulage, et
- le meulage étant configuré pour meuler des particules polymères séchées broyées provenant de l'agencement de broyage (38) en particules polymères séchées, broyées et meulées ayant un diamètre de particule moyen en masse de 250 um à 700 µm.

2. Agencement de séchoir à bande selon la revendication 1, **caractérisé en ce que**
- le deuxième broyeur (38.2) est placé en dessous du premier broyeur, sans vis de transport (FS), pour recevoir des particules polymères séchées pré-broyées.

3. Agencement de séchoir à bande selon la revendication 1 ou 2, **caractérisé en ce que**
- le deuxième broyeur (38.2) est configuré pour broyer les particules polymères séchées pré-broyées en particules polymères séchées finement broyées, ayant un diamètre de particule moyen en masse compris entre 1 mm et 5 mm, et/ou
- l'agencement de broyage (38) est configuré pour un temps de séjour des particules polymères inférieur à 90 s dans l'agencement de broyage.

4. Agencement de séchoir à bande selon l'une quelconque des revendications 1 à 3, **caractérisé en ce que**
- l'agencement de broyage (38) comprend un moyen de déviation, le premier broyeur (38.1) de l'agencement de broyage (38) étant agencé après le moyen de déviation (U) dans la direction d'écoulement du produit,
et/ou
- le premier broyeur (38.1) est localement placé par rapport au moyen de déviation pour recevoir des fragments d'un cordon polymère séché de particules polymères séchées, le moyen de déviation étant orienté par rapport au premier broyeur (38.1) de telle sorte que les fragments d'un cordon polymère séché tombent dans le premier broyeur (38.1), le premier broyeur étant notamment localement placé en dessous du moyen de déviation (U).

5. Agencement de séchoir à bande selon l'une quelconque des revendications 1 à 4, **caractérisé en ce que**
- le premier broyeur (38.1) est configuré sous la forme de la fraise de broyage (ZF) avec une table de support.

6. Agencement de séchoir à bande selon l'une quelconque des revendications 1 à 5, **caractérisé en ce que**
- le deuxième broyeur (38.2) est configuré sous la forme d'un broyeur à ailes croisées (KFZ), ou
- le deuxième broyeur ou un troisième broyeur est configuré sous forme de concasseur à cylindres (WB) ou sous la forme d'une vis de transport (FS).

7. Agencement de séchoir à bande selon l'une quelconque des revendications 1 à 6, **caractérisé en ce que** l'agencement de broyage (38) comprend une vis transporteuse en tant que deuxième broyeur (38.2) ou troisième broyeur, un broyeur de l'agencement de broyage, notamment le premier broyeur ou le deuxième broyeur, étant agencé directement avant la vis transporteuse (FS) dans la direction d'écoulement du produit.

8. Agencement de séchoir à bande selon la revendication 7, **caractérisé en ce que**
- la vis transporteuse (FS) est agencée en dessous d'un broyeur pour recevoir des particules polymères séchées tombant librement du broyeur.

9. Agencement de séchoir à bande selon l'une quelconque des revendications 1 à 8, **caractérisé en ce que**
- le broyeur à ailes croisées (KFZ) présente un arbre rotatif avec des barres fonctionnelles et une grille à barres fixe agencée directement en face de l'arbre, les barres fonctionnelles rotatives s'engageant dans des espaces intermédiaires entre des barres de concassage fixes de la grille à barres pour broyer le gâteau sec de gel polymère séché,
- les barres de concassage (16) présentant une distance axiale (a) qui n'est pas supérieure à cinq fois, notamment pas supérieure à quatre fois ou trois fois, une épaisseur (DF) des barres fonctionnelles (14),
et/ou
- les barres fonctionnelles (14) et/ou les barres de concassage (16) présentant une longueur (LF, LB) qui n'est pas supérieure à deux fois, notamment pas supérieure à une fois, le diamètre de l'arbre (10).

10. Agencement de séchoir à bande selon la revendication 9, **caractérisé en ce qu'**un espace axial (Δ) entre une barre fonctionnelle (14) et une barre de concassage (16) est inférieur à deux fois la largeur axiale (2*DF) de la barre fonctionnelle (14) et/ou est inférieur à deux fois la largeur axiale (2*DB) de la barre de concassage (16) et/ou l'espace axial (Δ) est inférieur à 20 mm, de préférence est inférieur à 15 mm, notamment l'espace axial est compris entre 8 mm et 12 mm.

11. Agencement de séchoir à bande selon l'une quelconque des revendications 1 à 10, **caractérisé en ce que**
- un broyeur de l'agencement de broyage (38) est configuré pour faire tourner l'arbre rotatif à une vitesse de rotation supérieure à 50 tours/minute et inférieure à 250 tours/minute.

12. Agencement de séchoir à bande selon l'une quelconque des revendications 1 à 11, **caractérisé en ce que** la fraise de broyage (ZF) présente l'arbre rotatif (10) avec au moins une barre fonctionnelle (14) et est configurée pour le fraisage de particules polymères séchées directement à partir d'un gâteau sec, et/ou la fraise de broyage présente l'arbre rotatif avec un nombre d'outils fonctionnels agencés le long d'un bord de travail suivant une spirale, la spirale présentant notamment un angle de pas compris entre 20° et 70°.

13. Agencement de séchoir à bande selon l'une quelconque des revendications 1 à 12, **caractérisé en ce que**
- le premier broyeur (38.1) a un bord de travail supérieur qui, dans le cas du broyeur à ailes croisées (KFZ), est agencé au niveau ou en dessous du niveau d'une surface de réception de la bande transporteuse pour recevoir une éjection du gâteau sec,
ou
- le premier broyeur (38.1), dans le cas de la fraise de broyage (ZF), un bord de travail est agencé au niveau ou au-dessus du niveau d'une surface de réception de la bande transporteuse pour le traitement par fraisage du gâteau sec et le support de l'éjection du gâteau sec vers le bas.

14. Agencement de séchoir à bande selon l'une quelconque des revendications 1 à 13, **caractérisé en ce que**
- le meulage est configuré pour meuler des particules polymères séchées broyées provenant de l'agencement de broyage (38) en particules polymères séchées, broyées et meulées, ayant un diamètre de particule moyen en masse de 300 um à 600 µm.

15. Procédé de séchage d'un gel polymère aqueux et de broyage du gel polymère séché en particules polymères séchées avec un agencement de séchoir à bande selon l'une quelconque des revendications 1 à 14.
